(19) **Europäisches Patentamt / European Patent Office / Office européen des brevets**

(11) **EP 3 496 366 A1**

(12) # EUROPEAN PATENT APPLICATION

(43) Date of publication:
**12.06.2019 Bulletin 2019/24**

(21) Application number: **17290156.3**

(22) Date of filing: **05.12.2017**

(51) Int Cl.:
**H04L 29/08** (2006.01)　　*G06F 7/24* (2006.01)
*G06F 9/50* (2006.01)　　*H04L 1/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Institut Eurecom G.I.E.**
**06410 Biot-Sophia Antipolis (FR)**

(72) Inventors:
• **Elia, Petros**
**06160 Juan Les Pins (FR)**
• **Lampiris, Eleftherios**
**06200 Nice (FR)**
• **Parrinello, Emanuele**
**91025 Marsala (TP) (IT)**

(74) Representative: **Schuffenecker, Thierry**
**120 Chemin de la Maure**
**06800 Cagnes sur Mer (FR)**

(54) **SYSTEM AND METHOD FOR MANAGING DISTRIBUTION OF COMPUTATIONS IN MULTI-ANTENNA AND MULTI-TRANSMITTER ENVIRONMENTS**

(57)　　In the field of distributed computing, the communication that needs to be performed between the computing nodes or helper nodes, poses a major performance bottleneck. In order to reduce the time associated with this so-called shuffling phase of inter-node communication, it was recently proposed that the computational redundancy across the nodes be exploited to allow - via a specific type of coded communications - that each transmission becomes useful to more than one node at a time, thus significantly reducing the overall communication time. But the authors in this patent application here, have identified as a main bottleneck of such coded' current approaches, the fact that the input dataset to be processed for a given job, has to be split into an exponentially large number of smaller subsets, which is often impossible, thus significantly constraining the speedup gains attributed to coded communication. The inventors here have invented a new method of assigning data to the computing nodes, which dramatically alleviates the aforementioned bottleneck, thus resulting in dramatic reduction to the overall execution time of the distributed computing job.

Fig. 1b

EP 3 496 366 A1

**Description**

**Technical field**

The invention relates to the field of parallel processing and more particularly to a system and method for managing distribution of computations in multi-antenna and multi-transmitter environments.

**Background Art**

Parallel computing has long been used to speed-up execution of algorithms, by exploiting the presence of more than one available computing node (server), to divide the original computational task into different smaller tasks (subtasks), and then to assign these subtasks to different servers which will compute them in parallel. The general distributed computing problem considers the job of processing a large dataset, and aims to generate $Q$ output results, in a distributed fashion across a set of $K$ computing nodes, each being in charge of generating one or more of the $Q$ output results.

Computational problems can be separated into two classes:

- the rare class of the so-called "embarrassingly parallel problems", which are the problems which, by nature are already parallel and thus require no communication between the servers to parallelize them, and
- ii) the class consisting of the majority of computational problems which - in order to be parallelized - require an intermediate processing ('mapping') step, and then require extensive exchange of information between the servers. While having more servers can speed up computational time, the aforementioned information exchange often yields unchanged or even increased communication load, leading to a serious bottleneck in the performance of distributed computing algorithms.

Many distributed computing algorithms are comprised of three main phases:

i) *the mapping phase,* where each element of the dataset is assigned to one or more servers, and where the servers perform an intermediate computation aiming to 'prepare' for parallelization,
ii) the *shuffling phase* (or communication phase), where servers communicate between each other the preprocessed data that is needed to make the process parallel, and
iii) the *reduce phase,* where the servers work in parallel to provide a final version of the output that each server is responsible for.

Distributed computing is based on the premise that as we increase the number of computing nodes, the mapping and reduce phases benefit from 'splitting' the job, thus yielding a reduced computational cost. At the same time though it has become apparent that - because the amount of data to be communicated is not diminished - this increase in the number of nodes does not diminish the cost of the shuffling phase, and in fact in many cases, it exacerbates the problem because more and more nodes need to exchange information. Hence the entire distributed computing process remains bottlenecked by the cost (delay) of the shuffling phase.

**Example - uncoded distributed computing.** To clarify this further, let us look at the example of a distributed *sorting algorithm* that seeks to sort (for example, in ascending order) a dataset of $F$ real numbers, and where this job will be performed (eventually in parallel)by a set of $K$ distributed nodes. This sorting algorithm is again comprised of the mapping and shuffling phases, and the final reduce phase where the servers will work in parallel to provide a sorted version of the part of the data that each server is responsible for.

In the mapping phase, the first step is data assignment, where each node is assigned (is sent) some fraction

$$\gamma \in (\tfrac{1}{K}, \tfrac{2}{K}, \ldots, 1)$$ of the dataset. Then, in the same mapping phase, next comes the step of pre-processing where each node must process their assigned subset, by splitting its assigned subset into $K$ different categories: category 1 consisting of all numbers of the subset that are - for example - between 0 and 100, category 2 with numbers between 100 to 200, and so on.

Consider for now the case where communication in the shuffling phase, is simple in the sense that it does not benefit from the aforementioned possible computational redundancy at the different nodes. In this shuffling phase, the nodes communicate the contents of these categories between themselves. Let us assume that in the end (i.e., in the next 'reduce' phase), Server 1 will be responsible for sorting all numbers between 0 and 100, Server 2 will be responsible for sorting all numbers 100 to 200, and so on. Then during the second phase, Server 1 must receive all categorized data, from all servers, that correspond to category 1, i.e., that are between 0 and 100, Server 2 must receive the category 2 data (numbers from 100 to 200) from all the other servers, and so on.

Once this shuffling (data exchange) is done, we can see that the problem is now fully parallelized. In the final reduce phase, each node performs the final sorting task only for its own category. Server 1 will sort all numbers from 0 to 100, Server 2 from 100 to 200, and so on. This can naturally be done in a completely parallel manner, in the sense that at the end, the sorted categories can be simply stacked together to form the sorted output of the entire dataset.

In the context of this same example of sorting, it is well known that the mapping phase (splitting numbers into categories based on their range) is a process whose cost increases linearly to the number of elements in the dataset, and thus this mapping phase requires time (denoted here as $T_{map}$) that is proportional to

$$T_{map} \approx T_m \cdot \gamma$$

where $T_m$ represents the time required for one node to map the entire dataset (of size $F$).Let us assume (for simplicity of presentation) that each category (each range of numbers) contains the same amount of $\frac{F}{K}$ elements.

Moving on to the shuffling phase, we see that this phase induces delay $T_{com}(F) \approx T_c \cdot (1 - \gamma)$, where $T_c$ denotes the time required to transmit the entire mapped dataset, from one node, to another, without any interference from the other nodes. $T_c$ essentially describes the capacity of the communication link, as a function of the dataset. The observed reduction by the factor $(1 - \gamma)$, is due to the fact that each node already has a fraction $\gamma$ of each category, and thus already has a fraction $\gamma$ of the category that that node will eventually be responsible for during the reduce phase next.

Finally, in the reduce phase, we have duration $T_{red} \overset{\text{def}}{=} T_{red}(\frac{F}{K})$, where $T_{red}(\frac{F}{K})$ is the time required for a single node to reduce a mapped dataset of size $\frac{F}{K}$ elements. Note that, for this specific case of sorting, $T_{red}(F)$

$$T_{red}\left(\frac{F}{K}\right) \approx \frac{F}{K} \log \frac{F}{K}.$$

$\approx F \cdot \log F$, and thus

Consequently for this uncoded algorithm (generally referred to as the MapReduce algorithm) - under the traditional assumption that the three phases are performed sequentially - the overall execution time becomes

$$T_{tot}^{MR} = T_{map} + T_{com} + T_{red} \approx T_m \cdot \gamma + T_c \cdot (1 - \gamma) + \frac{F}{K} \log \frac{F}{K}.$$

We can see from the above equation that, as mentioned before, while the joint cost $T_m \cdot \gamma + \frac{F}{K} \log \frac{F}{K}$ of the mapping and reduce phases can keep on decreasing as we add more servers (as $K$ increases), the communication time $T_c \cdot (1 - \gamma)$ is not reduced and thus this cost of the shuffling phase emerges as the unchanged actual bottleneck of the entire process.

**Coded distributed computing.** Recently, a method of reducing the aforementioned communication load was introduced in [1], which modified the mapping phase, in order to allow for the shuffling phase to employ *coded communication.* The main idea of the method - which in some settings is referred to as *Coded MapReduce* - was to assign and then force each node to map a fraction $\gamma$ (e.g. $\gamma \geq \frac{1}{K}$ ) of the whole dataset, and then - based on the fact that such a mapping would allow for common mapped information at the different servers - to eventually perform coded communication where during the shuffling phase, the packets were not sent one after the other, but were rather combined together into XORs and be sent as one. The reason this speedup would work is because the recipients of these packets could use part of their (redundant) mapped packets in order to remove the interfering packets from the received XOR, and acquire their own requested packet. This allowed for serving several users at a time, thus reducing the communication (shuffling) time.

**Example - coded distributed computing.** As an example, assume *that K = 3* servers are being assigneda dataset of $F$ numbers to perform a sorting algorithm on, as introduced in the previous example. For $\gamma = \frac{2}{3}$, in the conventional (uncoded) setting, the overall time would have been approximately equal to

$$T_{tot}^{MR} \approx T_m \gamma + T_c(1-\gamma) + \frac{F}{K}\log\frac{F}{K} = \frac{2}{3}T_m + \frac{1}{3}T_c + \frac{F}{3}\log\frac{F}{3}.$$

If though one exploits the fact that each mapped subset of the dataset has redundancy $t = K\gamma = 2$, (i.e., it appears $t = K\gamma = 2$ times), then - by employing the ideas in Coded MapReduce - one can achieve (as we will see below) a lower overall execution time equal to

$$T_{tot}^{CMR} = T_{map} + T_{com} + T_{red} \approx T_m\gamma + T_c\frac{(1-\gamma)}{K\gamma} + \frac{F}{K}\log\frac{F}{K}$$

$$T_{tot}^{CMR} \approx \frac{2}{3}T_m + \frac{1}{6}T_c + \frac{F}{3}\log\frac{F}{3}.$$

This new "coded" process happens - in this example - as follows. Assume that the dataset is divided into 6 non-overlapping subsets $F_1, F_2, F_3, F_4, F_5, F_6$, each of size $\frac{F}{6}$ elements, and that Server 1 is assigned (receives) subsets $F_1, F_2, F_3, F_4$, Server 2 subsets $F_3, F_4, F_5, F_6$ and Server 3 is assigned subsets $F_1, F_2, F_5, F_6$. Then each server maps their own subsets into $Q = 3$ categories, i.e., splits each of their own subsets into, for example, $Q = 3$ ranges of numbers. Hence for example, Server 1, would map subset $F_1$, into 3 categories $f_1^1$, $f_1^2$, $f_1^3$, would map $F_2$ into $f_2^1$, $f_2^2$, $f_2^3$, would map $F_3$ into $f_3^1$, $f_3^2$, $f_3^3$, and would map $F_4$ into $f_4^1$, $f_4^2$, $f_4^3$. Similarly Server 2 would map $F_3$ into $f_3^1$, $f_3^2$, would map $F_4$ into $f_4^1$, $f_4^2$, $f_4^3$, would map $F_5$ into $f_5^1$, $f_5^2$, $f_5^3$ and would map $F_6$ into $f_6^1$, $f_6^2$, $f_6^3$, and similarly for Server 3. So we see that for example, the mapping outputs $f_3^1$, $f_3^2$, $f_3^3$ have been created by both Server 1 and Server 3. Now we have the following subset-specific categories $\{f_1^1, f_1^2, f_1^3, f_2^1, f_2^2, f_2^3, f_3^1, f_3^2, f_3^3, f_4^1, f_4^2, f_4^3, f_5^1, f_5^2, f_5^3, f_6^1, f_6^2, f_6^3\}$. Given that - later on in the reduce phase - Server 1 will be responsible for category 1, Server 2 for category 2, and Server 3 for category 3, implies that during the shuffling phase, Server 1 will need to acquire all the subset-specific categories with upper index 1, i.e., $f_1^1$, $f_2^1$, $f_3^1$, $f_4^1$, $f_5^1$, $f_6^1$, (some of which, Server 1 already has) Server 2 will need to acquire $f_1^2$, $f_2^2$, $f_3^2$, $f_4^2$, $f_5^2$, $f_6^2$ and Server 3 will need to acquire $f_1^3$, $f_2^3$, $f_3^3$, $f_4^3$, $f_5^3$, $f_6^3$.

Hence the shuffling phase would take the form of the following transmitted signals: $x_1 = f_1^2 \oplus f_3^3$, then $x_2 = f_4^3 \oplus f_5^1$, then $x_3 = f_2^2 \oplus f_6^1$, where the $x_i, i = 1,2,3$ denote the transmitted signals, and where $x_1$ is sent by Server 1, $x_2$ is sent by Server 2, and $x_3$ by Server 3, while symbol $\oplus$ denotes the bit-wise XOR operation. This results in a decrease in the communication time.

Generally speaking, with the overall redundancy being $t = \gamma K$, meaning that each server is assigned a fraction $\gamma \in \left[\frac{1}{K}, \frac{2}{K}, ..., 1\right]$ of the whole dataset, and given a total of $Q = K$ categories, then the overall execution time using coded communication, becomes

$$T_{tot}^{CMR} = T_m \gamma + T_c \frac{(1-\gamma)}{K\gamma} + \frac{F}{K} \log \frac{F}{K}$$

which in turn implies a theoretical reduction by a factor of $t = \gamma K$ in the communication delay, from $T_c(1 - \gamma)$ in the uncoded case, to $T_c \frac{(1-\gamma)}{t} = T_c \frac{(1-\gamma)}{K\gamma}$ in the coded case. This theoretical reduction that appears in the state of art Coded MapReduce approaches, is a result of the coding-enabling structure that links the subpackets (recall:$F_1,F_2,F_3,F_4$ goes to Server 1, $F_3,F_4,F_5,F_6$ to Server 2, and $F_1,F_2,F_5,F_6$ to Server 3) and that links their mapped outputs. As we will see below, this state-of-art structure has some serious drawbacks, and our solution is to invent a fundamentally different structure that solves these problems.

**Identifying here the Subpacketization Bottleneck of distributed computing.** Despite the fact that the aforementioned coded method (for example, Coded MapReduce) promises, in theory, big delay reductions by a factor of $t = \gamma K$ compared to the conventional - uncoded - scheme, the authors of this patent application here, have identified a crucial bottleneck, referred to as the *Subpacketization Bottleneck,* which limits the gains of Coded MapReduce to levels far below the promised theoretical gains. The bottleneck comes due to the requirement, in the current state-of-art, that the initial dataset must be split into an exponentially high number of smaller subsets (subpackets), where this number can be as high as the well-known *n*-choose-*k* (binomial) form

$$S = t \binom{K}{t}$$

where $t = K\gamma$ is the integer parameter of choice of gain: the higher the $t,$ the lower the communication cost $\frac{(1-\gamma)}{K\gamma} T_c = \frac{(1-\gamma)}{t} T_c$ of the shuffling phase, but this requires higher subpacketization. Thus naturally, if the size of the dataset places a hard limit on the subpacketization to be no more than some $S \leq S_{max},$ then $t$ must be limited accordingly. It is important to note that the currently required subpacketization $S = t\binom{K}{t},$ increases exponentially as a function of the parameter $K$ and becomes astronomical for high values of $t$, and hence it can become enormous very soon.

**The three main problems of high subpacketization.** This high subpacketization requirement of the existing state-of-art Coded MapReduce algorithms, creates the following problems:

- *Limiting the communication gain t.* The fact that the finite-sized dataset can only be divided into a finite number of subpackets, limits the values of parameter $t$ that can be achieved, because the corresponding subpacketization, which need be as high as $S = t\binom{K}{t},$ must be kept below some maximum allowable subpacketization $S_{max}$ which itself must be substantially less than the total number of elements $F$ in the dataset. When this number $S = t\binom{K}{t}$ exceeds the maximum allowable subpacketization $S_{max},$ then what is often done is that coded communication is limited to include coding that spans only $\overline{K}$ users at a time (thus coded communication is repeated $\frac{K}{\overline{K}}$ times, for some $\overline{K}$ that satisfies $\overline{K}\gamma \left( \frac{\overline{K}}{\overline{K}\gamma} \right) < S_{max})$ thus resulting in a smaller, actual, gain $\overline{t} = \overline{K}\gamma < K\gamma,$ which can be far below the theoretical communication gain from coding.

- *Increasing packet overheads.* The second problem caused by the requirement of an astronomically large number of subpackets, relates to the fact that as the number of subpackets increases, the subpackets themselves become smaller and smaller, which means that the transmissions that combine these subpackets (the XORs), are themselves becoming smaller and smaller, which means that the overhead 'header' that must accompany each such transmission, will occupy a significant portion of the transmitted signal. Simply put, the more the subpackets, the smaller they are, hence the more the communication load is dominated by header overheads.

- *Inefficient XOR creation due to category size unevenness.* The third problem from high subpacketization is that the resulting small subpacket size, causes high variations between the sizes of the categories that each subpacket is split into, which further restricts the aforementioned gains, because size-unevenness requires large amounts of zero padding (we can only XOR equal-sized bit streams) which wastes communication resources.

As we recall, each subpacket is processed (for example, split) during the mapping phase, into different categories, and as we can imagine, within a subpacket, the size of each category can vary. While this variation is smoothened out (averaged out, due to the law of large numbers) for large subpacket sizes, when the subpackets are relatively small, this variation becomes more pronounced, in turn causing serious problems when the different subpacket categories are XORed together.

This can be better understood by using the previously introduced example of $K = 3$ nodes, with a chosen redundancy of $t = K\gamma = 2$, but instead of assuming that each category has equal amount of elements, i.e., instead of assuming that $\left|f_i^1\right| = \left|f_i^2\right| = \left|f_i^3\right| = \frac{1}{3}|F_i| = \frac{F}{18}$, $i = 1,2,...,6$, (recall that each of the 6 subpackets has size

$|F_i| = \frac{F}{6}$ )we will instead assume that any category $f_1^3, f_2^3, f_3^3, f_4^3, f_5^3, f_6^3$ with upper index 3,will each occupy a fraction $\frac{1}{2}$ of the elements of the respective subpacket (i.e., $\left|f_i^3\right| = \frac{1}{2}|F_i| = \frac{F}{12}$, $i = 1,2,...,6$), while categories with upper index 1 or 2 ( $f_1^1, f_2^1, f_3^1, f_4^1, f_5^1, f_6^1$, and $f_1^2, f_2^2, f_3^2, f_4^2, f_5^2, f_6^2$ ), will only have $\frac{1}{4}$ of the elements of their respective subpacket each (i.e., $\left|f_i^1\right| = \frac{1}{4}|F_i| = \frac{F}{24}$, $i = 1,2,...,6$), and $\left|f_i^2\right| = \frac{1}{4}|F_i| = \frac{F}{24}$, $i = 1,2,...,6$. In the case of uncoded placement, the corresponding delay would remain

$(1 - \gamma)T_c = \left(1 - \frac{2}{3}\right)T_c = \frac{1}{3}T_c$ because there are no XORs, and because despite the unevenness, the total amount of information that must be communicated, remains the same. On the other hand, in the case of coded communication, having $\left|f_i^1\right| = |f_2^1| = \frac{1}{4}|F_i| = \frac{F}{12} \neq \left|f_i^3\right| = \frac{1}{2}|F_i| = \frac{F}{6}$, in turn means that for every aforementioned XOR $x_1 = f_1^2 \oplus f_3^3$, $x_2 = f_4^3 \oplus f_5^1$ that has Category-3 elements inside, we would have to perform zero padding; for example, in the case of $x_2 = f_4^3 \oplus f_5^1$, we would have to zero pad $f_5^1$ to double its size, thus wasting resources. Now the three introduced XORs ( $x_1 = f_1^2 \oplus f_3^3$, $x_2 = f_4^3 \oplus f_5^1$, $x_3 = f_2^2 \oplus f_6^1$ )

) will have sizes $|x_1| = |x_2| = \frac{F}{12}$, $|x_3| = \frac{F}{24}$, and thus sending all three would require a total delay of $\frac{T_c}{12} + \frac{T_c}{12} + \frac{T_c}{24} = \frac{5T_c}{24}$. Comparing this to the delay $\frac{1}{3}T_c$ in the uncoded case, we can see that the multiplicative gain - due to coded communication - is limited to $$gain = \frac{\left(\frac{1}{3}\right)}{\left(\frac{5}{24}\right)} = \frac{8}{5} = 1.6,$$ instead of the theoretical gain of $t = 2$.

On the other hand, by decreasing subpacketization, we automatically increase the size of these subpackets, thus decreasing - with high probability, due to the law of large numbers - the relative unevenness, which in turn allows for higher speedup gains.

In what follows, we will solve the above problems with a novel invented method of assigning data across servers, and a novel method of cooperation/coordination between servers in the transmission, which will jointly yield a much reduced subpacketization, allowing for a wider range of $t$ values to be feasible, thus eventually allowing very substantial reductions in the overall execution time for a large class of distributed computing algorithms.

**Example of impact of our invented solution.** To get an idea of the massive gains offered by the invention here, consider an example where the number of nodes (servers) is $K = 120$, and where the *target* redundancy (theoretical communication gain) was initially set to $t = K\gamma = 12$. For the state-of-art (coded) mapping and communication algorithm, to achieve this redundancy (and thus to achieve the reduction of the shuffling phase by a factor of $t = 12$), would require subpacketization equal to $S = 12 \cdot \binom{120}{12} \approx 10^{17}$ different subpackets (each data set would have to be split into more $10^{17}$ smaller pieces). This clearly suggests that such high $t$ cannot be chosen here, thus leaving the shuffling-phase delay as the dominant bottleneck. On the other hand, the mapping and shuffling methods that we have invented, will allow us - as we will see - to employ node cooperation (forming groups of four nodes each), and to achieve the full desired delay-reduction by a factor of $t = 12$, with a dramatically reduced subpacketization

$$S^* = \frac{12}{4} \cdot \binom{\frac{120}{4}}{\frac{12}{4}} = 3 \cdot \binom{30}{3} = 12180.$$

The following bibliographical references are of interest to this technical problem.

[1] S. Li, M. A. Maddah-Ali and A. S. Avestimehr, "Coded MapReduce," 2015 53rd Annual Allerton Conference on Communication, Control, and Computing (Allerton), Monticello, IL, 2015, pp. 964-971.

[2] S. Li, S. Supittayapornpong, M. A. Maddah-Ali and S. Avestimehr, "Coded TeraSort," 2017 IEEE International Parallel and Distributed Processing Symposium Workshops (IPDPSW), Lake Buena Vista, FL, 2017, pp. 389-398.

[3] S. Li, Q. Yu, M. A. Maddah-Ali and A. S. Avestimehr, "Edge-Facilitated Wireless Distributed Computing," 2016 IEEE Global Communications Conference (GLOBECOM), Washington, DC, 2016, pp. 1-7.

## Summary of the invention

It is an object of this invention to decrease the communication time required by distributed computing algorithms by using replication of the dataset among the nodes.

It is an object of this invention to reduce the execution time of replication-assisted distributed-computing algorithms, by using node cooperation and a new assignment of dataset chunks to the nodes.

It is an object of this invention to reduce the complexity associated with dataset-replication based distributed-computing algorithms.

It is another object of this invention to use an intermediate node or base station or master node to facilitate the communication between the computing nodes, where this intermediate node has two or more input and output interfaces.

It is an object of this invention to reduce the complexity associated with the communication phase of node-assisted replication-based distributed-computing algorithms.

It is an object of this invention to use multiple-antennas in the helper (facilitator) node in a wireless distributed computing environment, where the helper node facilitates the inter-node communication, to allow for reduced communication times, which reductions come from a combination of precoding, node cooperation and redundancy-aided computation.

It is still another object of this invention to use multi-antenna helper/facilitator node(s) to reduce implementation and hardware complexity of distributed computing systems.

It is another object of this invention to introduce a method that extends single antenna facilitator-based computing algorithms, to be applied in systems with helper/facilitator node(s) with at least two antennas.

It is another object of this invention to apply multiple transmitting helper/facilitator nodes, rather than just a multiple-antenna facilitator node, to achieve the above said objects of this invention.

It is another object of this invention to introduce a method of using multi-node transmitter coordination to deliver files, where said method achieves reduced file subpacketization.

It is another object of this invention to apply transmitters with multiple interfaces, or multiple transmitters or relays, to achieve the above said objects of this invention in the presence of a wired network.

The above and other objects of this invention are achieved by means of a process that applies to a set of $K$ computational nodes connected in a wired or a wireless environment and where each node is equipped with one or more communication input-output interfaces and which nodes are assigned a task to execute in a distributed manner, such as MapReduce and which nodes need to communicate through a bottleneck connection. The here proposed process involves the steps of

- Grouping $K$ nodes into groups containing a specified number of nodes per group,

- Assigning dataset fractions to nodes for the mapping process in a manner that is dependent, among other things, on the group each node belongs to,

- Mapping at each node that maintains some of the group-based structure introduced in the above step,

- Exchanging of mapped subsets of the dataset by having members of a group form a number of distributed vectors, which will then be combined into a single vector, for example by forming a linear combination of those messages, and transmit that vector,

- Decoding at the receiving nodes by means of state-of-art decoder, as well as using the mapped sub-datasets that each node has computed.

**Description of the Drawings**

**Figure 1a** illustrates a first embodiment of the invention based on anarchitecture of a wired system of a set of *K*nodes connected to a set of communicators.

**Fig 1b** illustrates the main phases of the basic process.

**Figure 2** illustrates the process of segment creation and assignment of segments to the computing nodes corresponding to the wiredsetting of Figure 1.

**Figure 3** illustrates the process of decoding of segments in the wired setting of Figure 1.

**Figure 4** illustrates the process of transmission of segments in the wired system corresponding to Figure 1.

**Figure 5** illustrates a second embodiment of the invention wherein a set of *K* nodes with computing capabilities and which nodes are capable to communicate in a wireless environment.

**Figure 6** illustrates the process of segment creation and assignment to the computing nodes corresponding to the wireless setting of Figure 5.

**Figure 7** illustrates the process of decoding of the segments corresponding to the wireless setting of Figure 5.

**Figure 8** illustrates the process of transmission of segments in the wireless system corresponding to Figure 5.

**Figure 9** illustrates a third embodiment of the invention based on a wireless Base Station that is used to exchange information between wireless nodes with computing capabilities.

**Figure 10** illustrates the creating of segments and the assignment of-these segments to nodes in the environment corresponding to Figure 9.

**Figure 11** illustrates the process of decoding of the segments corresponding to the wireless setting of Figure 9.

**Figure 12** illustrates the process of transmission of segments in the wireless setting of Figure 9.

**Figure 13** illustrates the process of signal reception and transmission taking place in the Base Station and corresponds to the setting of Figure 9.

**Description of the Preferred Embodiments**

We will now describe in detail how one can reduce the delay of distributed execution of algorithms when these algorithms require communication between the computing nodes. Specifically we will describe how the assignment of subpackets can be modified in order to allow for a novel method of efficient node cooperation in the transmission (as well as in order to allow for the use of possible multiple antennas), yielding a reduced overall execution time of these algorithms.

**Identification of the Problem**

Current state-of-art methods induce redundancy in the mapping phase, by allowing mapping of each element of the dataset to be performed at more than one node. This redundancy can be exploited by creating multicasting opportunities where transmitted signals are useful to many users at a time, which in turn results in speedup gains. Unfortunately such state-of-art methods though, achieve speedup gains that are severely limited, because of the identified limitation that - for the state-of-art algorithms - larger gains require the dataset to be segmented into an astronomically large number of subpackets.

This limitation is tackled here with invented new methods and apparatus, which dramatically increase the gains compared to state-of-art methods, by dramatically decreasing the aforementioned subpacketization complexity and by dramatically decreasing the minimum dataset size that is needed for high gains to appear.

In order to achieve such a feasible solution, the inventors had to reconsider the formulation of the technical problem to solve. In summary, in order for the high gains to appear, one needs to reduce the aforementioned subpacketization.

**By reconsidering such technical problem, the inventors have carried out a new approach and a new mapping and shuffling solution for achieving an exponential reduction in segmentation complexity, and for achieving a multiplicative reduction in the delay of the shuffling phase of the algorithm.**

Example:To get an idea of the gains from the invented algorithm that will be revealed in the proceeding part of the patent application, let us consider an example where a set of $K = 400$ wireless, single antenna nodes are engaged to perform parallel execution of a sorting algorithm. In this context, the subpacketization that results from state-of-art algorithms is, as stated before, equal to $S = t \cdot \binom{K}{t},$ for some choice parameter $t$, which denotes the gain (multiplicative reduction of the delay) in the communication phase. For such high number of computing nodes, this subpacketization could become astronomical. For example, if we aimed for a reduction of $t_1 = 5$ then the corresponding required subpacketization would have been $S_1 \approx 4 \cdot 10^{11}$, while if we aimed for delay reduction of $t_2 = 10$, this would imply a state-of-art subpacketization of $S_2 \approx 2 \cdot 10^{20}$. This means that in order for any of the two gains to appear, it is required that the original dataset should have at least $S_1$ or $S_2$ elements respectively. As these numbers are astronomical, the corresponding gains would never materialize. On the other hand, by employing the novel invented method here that assigns data in a way that allows for transmitter coordination with a certain cooperation parameter $L_c$, (note that the processes of cooperation and data-assignment, as well as the role of parameter $L_c$, will be described in detail later on in the document),large gains appear. Specifically by setting this cooperation parameter equal to $L_c = 5$, we can achieve the same reductions in the communication-phase delay, by respective factors $t_2 = 5$and $t_2 = 10$ , but now with much reduced subpacketization $S_1^* = 80$ and $S_2^* = 6320$ respectively. From this example we can see that the here-proposed solution will be able to dramatically reduce the subpacketization of these systems, and thus will allow - for the first time in many settings of practical relevance - for the theoretically predicted performance to emerge.

**General principle of the proposed Technical Solution resulting in increased gains**

These new increased gains are achieved mainly as a result of three innovative aspects that are key in our invention:

a) A novel segmentation (fragmentation of the overall dataset) and subpacket assignment technique, which - unlike in any other algorithms(e.g., unlike in the state-of-art Coded MapReduce method) -regulates the amount of overlap between the subsets assigned to the nodes, to be a variable that changes from node to node. It is, to the best of our knowledge, the first time that it appears in the literature of redundancy-assisted computation, an algorithm that assigns dataset subpackets in such a way that the overlap between the segments of two nodes is a variable that is dependent on the group (see below) that a node belongs to. This results in a new structure of linking the mapped data at different nodes, and it is a key ingredient in the success of the algorithm.

b) The introduction of the concept of node-grouping (server-grouping), which allows - in some instances of the problem, if we choose to - to employ an identical subpacket assignment for all the nodes in a given group. This breakthrough reduces the subpacketization complexity of the problem without reducing the performance gains.

c) The introduction of node cooperation/coordination in the context of coded communications, which takes advantage of the node grouping and the new structure that links the mapped data at different nodes, in order to create a combination of distributed vectors of data that can be now delivered in a single transmission duration, and which would have otherwise needed many transmission durations to be sent. This coordination is achieved <u>without</u> any additional overhead for exchange of mapped data between the nodes.

**Main phases of the proposed process**

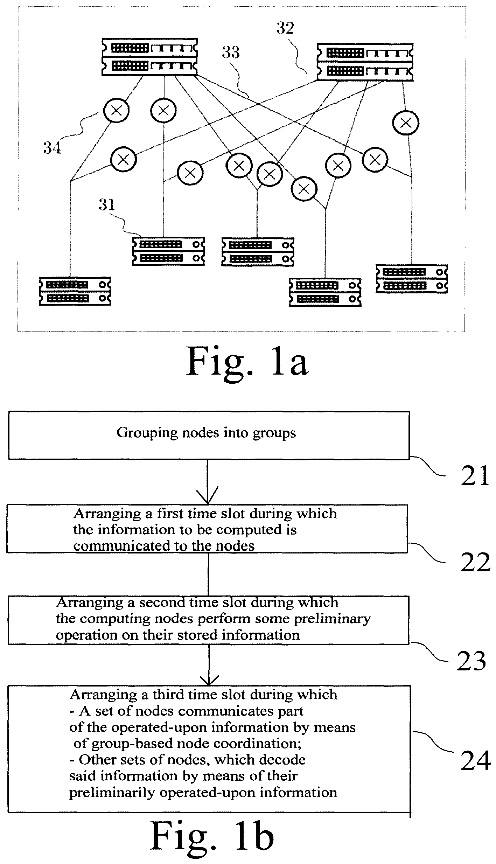

More particularly, the invention delivers a process, which main phases are illustrated in figure 1b, that applies to a system of $K$ single-antenna or multiple-antenna computing nodes, forming a wireless or wired network of nodes that must perform, in a distributed manner, a computational task, and which involves four main phases:

a. Grouping nodes into groups, with a given number of nodes per group;

b. Arranging a first time slot during which the information to be computed is communicated to the nodes and where each node stores a predefined portion of this information;

c. Arranging a second time slot during which the computing nodes perform some preliminary operation on their stored information;

d. Arranging a third time slot during which a set of nodes communicates part of the operated-upon information by means of group-based node coordination. Other sets of nodes, which decode said information by means of their preliminarily operated-upon information.

More particularly the process involves the following steps:

- *Grouping K nodes* into groups containing a specified number of users per group. A grouping function $g$ takes as input the nodes' names and potentially other elements - such as the network topology (channel capacities), node battery life and nodes' computational power - and then this function outputs the number of the group a node is assigned to. We use the symbol $G_i$ to indicate a set of users belonging to the $i$-th group $G_i$, and we use $G_i(j)$ to denote $j$-th user of group $G_i$. Thus, if group $G_i$ is comprised of $L$ users, then $G_i = \{G_i(1), G_i(2), ..., G_i(L)\}$.

- The *assignment phase in a first time slot,* during which the dataset is distributed to the computing nodes with a proper strategy. Initially, a segmentation function is executed by the (master) node or the set of nodes that has/have the dataset (or who know where each element of the data is located). Such segmentation function, $\varphi$, takes as input the dataset F and divides it into non-overlapping subpackets (*or segments* or *chunks*) which are denoted by $F_{\sigma, \tau}$ where we use a double subscript index $\sigma, \tau$ that will be explained later on. After that, the master node/nodes employs/employ one or more antennas or wires to communicate the segments to the computing nodes. Computing nodes receive and store some of the segments according to, at least, the aforementioned grouping of the nodes. Moreover, in this phase, a process, $R$, assigns each of the $Q$ categories that will be created in the next process - i.e., in the mapping process - to one of the nodes. We denote as $r_{Gi(k)}$, the set of all categories assigned to node $G_i(k)$ (these are the categories that the node will be eventually responsible for in the last phase), and we denote as $r_{Gi(k)}(j)$ the $j$-th category corresponding to the set $r_{Gi(k)}$. We here note that whenever the dataset is already divided into smaller segments stored across several servers (this is done quite often, for example, for fault-tolerance reasons), the data assignment phase and the previously described grouping function, can easily be re-designed - by simply extending the two aforementioned phases which will be described in details later on - to further split, if necessary, and move the segments across the servers in order to have the desired structured redundancy of the dataset placed across the servers.

- The *mapping phase* performed in the second time slot, wherein each computing node performs some pre-processing computation over the part of the dataset that that node has received in the assignment phase. In this phase we have different mapping functions, executed at all computing nodes, where a mapping function takes as input a subpacket, and outputs $Q$ *output categories* for that subpacket (i.e., the mapping of each subpacket, consists of $Q$ categories). The type of the map function may depend on the type of job to be processed.

- The *communication process* or *shuffling phase,* performed in a third time slot, during which all computing nodes exchange some of the categories (some of the mapped data) that have been generated during the second phase. In particular, in this process, each node receives the categories that it is in charge of reducing in the following, fourth and last (reduce) phase. The aforementioned data exchange is happening here (in the shuffling phase) by some "boosted-transmission" invented here, which exploits the here-invented structure in the mapped data, to serve - via the same communication channel - a high number of nodes with a single message, even if these nodes request different mapped data. This communication process is further comprised of the following three steps:

○ **CSI exchange:** In the wireless environment, nodes exchange channel state information (CSI), while in the wired environment the nodes exchange information on the network coding coefficients (NCCI). We note that this exchange of CSI and NCCI need not be explicitly a result of exchanging such information between the nodes, but rather can be a result of precoding pilots, as is common in wireless communications. Given a pair of groups $G_i$ and $G_j$, and assuming now for clarity that each group has $L$ nodes, we denote as $H_{G_i,G_j}$ the $L \times L$ channel matrix between group $G_i$ and group $G_j$, whose entries are the channel gains in the wireless case and the network coding coefficients in the wired case. Thus, in this step, the nodes are informed(via CSI exchange or pilot training) of the matrices $H_{G_i,G_j}$ that will be required in the subsequent steps. On the other hand, the channel matrix between a set of nodes in Group $G_i$ and the Base Station (third embodiment) is denoted by $H_{BS,G_i}$ or $H_{G_i,BS}$ for, respectively, the downlink or the uplink.

○ **Message Creation& Transmission:** Nodes belonging in the same group, create a linear combination of the messages intended for some other groups, which when transmitted by all nodes in a group result in a distributed vector. In the message creation, each group acts as a distributed transmitter. Assuming Group $G_i$ to be such a distributed transmitter, then we denote with $H^{\perp}_{G_i,G_j}$ the *precoding* matrix used to serve interference-free (or with reduced interference) each user of group $G_j$. In the wired case, such precoder could for example simply be the inverse of the matrix $H_{G_i,G_j}$, while in the wireless case it can be any chosen precoder such us ZF, MMSE, dirty paper(or other precoders that maximize different performance and/or complexity metrics). Each transmission will involve a given set of $N + 1$ groups, i.e., one transmitting group and $N$ receiving groups, where this set of groups is denoted by $\chi$. We will henceforth refer to this set of groups as the *'active groups'*. For a *given* $\chi$, one of these groups, say Group $G_i$ E $\chi$, is chosen at a time, to act as a distributed transmitter while the others are the receiving groups. Consequently, we will denote - given a set of active groups $\chi$, and given a transmitting group $G_i$ - the transmitted signal (vector) as $X_{G_i,\chi\backslash G_i}$, which is formed as a combination (e.g. a linear combination) of precoded messages, for all nodes that belong in the groups inside $\chi$, apart from the transmitting group$G_i$.

○ **Decoding:** Decoding in the participating receiving nodes takes place on the basis of the use of the categories that each node has mapped in the second phase, and as a function of the channel state information (wireless) or network coding coefficients information (wired) that have been received during the CSI exchange phase.

In accordance with the invention described, the exchange of information during the shuffling phase is done by first selecting a subset of the receiving groups and then selecting another group (a transmitting group) that will simultaneously deliver information to all the nodes inside the selected subset of the receiving groups, by having the nodes of the transmitting group jointly form a distributed transmitted vector, which is comprised of some of the desired content of each node from the selected receiving groups and which can be the combination (for example, the linear combination) of the precoded data vector for each group.

Decoding at a receiver group is done by using the mapped content (present at each node in that specific group) along with the needed CSI or the network coding coefficients relating to the other receiving groups participating in the communication at that particular instance, meaning that CSI or network coding coefficients need only correspond to receivers in the selected (active) groups.

One thus sees that, by introducing here a new apparatus and method which precede the redundancy assignment and communication phases, we can improve the performance: from that of a system that achieves a compromised redundancy-aided multicasting gain, to the performance of a system that achieves in many cases of real-life interest, the entire (theoretical) speedup gain, thus boosting the previously compromised gains by a substantial multiplicative factor. This is the first time that node coordination/cooperation methods (and/or multi-antenna methods) are used to boost the real-life gains of Coded MapReduce methods.

**Note on a key aspect of the invention:**

A key aspect of the proposed communication process above is based on the grouping of the nodes which defines, to a certain extent, the assigned content and the mapping output, whereby the assignment algorithm guarantees that for some nodes, the data that they are assigned to are similar or identical (and the mapping actions at these nodes are also similar or identical), while on the other hand, other nodes are assigned content, which they then map, in such a way that there exists only a certain degree of partial overlap between these nodes' mapped data. The speedup gains are in part because intra-group assigned content has very high redundancy (for example, assignment in the same group can have all elements in common), while inter-group content assignment can have reduced redundancy. Having some nodes (members of the same group) with very similar or identical assigned (and then mapped) content, manages to reduce the dimensionality of the segmentation and multicasting problems, thus reducing complexity, while maintaining the overall speedup gain.

**Note on the timeliness of the invention:**

The above exploitation of multiple nodes to decrease computational time, comes at a time when the dimensionality of computational problems is exploding, and at a time when the shuffling phase communication load is becoming the clear bottleneck in many distributed computing problems, especially in the presence of a large number of computational nodes.

**Note on the scope of the invention**

The intent of this patent is to change the structure linking the mapped output at different computing nodes, so as to allow for a type of node coordination that leads to substantial speed-up in the shuffling phase of distributed computing algorithms. This coordination is achieved without any additional overhead for exchange of mapped data between the nodes. As a result, the other two phases, namely the mapping and reduce phases, are algorithmic specific, i.e., their implementation depends on the algorithm design. For example, the reduce phase of a sorting algorithm could be a "Merge Sort" or a "Quick Sort", but, whatever the choice, the here-proposed invention is not affected by the aforementioned choice.

In order to illustrate the broad possibilities of application of the invention, there will now be described, in detail, a first embodiment covering a wired connection over bottleneck links (I), a second embodiment in a general wireless environment where nodes can communicate directly between them (II), and a third embodiment for a wireless environment where nodes are communicating only via a helper node with multiple antennas (III).

**I. First embodiment (Wired_Computation Network)**

There will now be described a preferred first embodiment showing the invented role given to $K$ nodes with computing capabilities, where these nodes are connected in a wired network and share a bottleneck connection. The objective is to offload a computational task to these nodes, so that it can be performed in a parallel manner. We will focus on distributed computation problems which require data exchange between the nodes, such as in the MapReduce paradigm, and where this data exchange between the nodes, can pose a bottleneck in reducing the overall execution time of the computation.

To tackle the problem of limited gains caused by the aforementioned subpacketization constraints, we will demonstrate in this embodiment how a novel assignment of data to the nodes (together with the corresponding mapping at these nodes), along with node coordination in transmission, will allow for increased gains and substantial reductions in the total execution time of the overall distributed processing algorithm, as compared to the state-of-art methods.

Figure 1 shows the first embodiment, where $K$ computing nodes (31) are connected via routers or relays **(32),** thus sharing bottleneck links via wired connections (33),and where different network coding operations can be performed on received signals at different points in the links**(34)** so that the input-output relationship is a high rank matrix. In the here-proposed solution, by inducing and then exploiting node cooperation/coordination, we can severely reduce the subpacketization requirements to a number that could be, in some cases, even less than the number of nodes. To do so, we will describe a new assignment of dataset segments (of subpackets), and a new method of data exchanging between the nodes, where this method is based on node cooperation and on the fact that network coding operations take place to form a higher-rank "channel".

The dataset is to be divided among the nodes, while the whole process is composed of four phases. In the **first phase,** the dataset is divided into chunks (subpackets), and different chunks are communicated (assigned) to different nodes. In the **second phase,** also called the map phase, the nodes perform a pre-processing (mapping) step on the subpackets that each node has received in phase 1, which results in the creation of $Q$ categories of data, for every subpacket, at each node. In the **third phase**, also called the communication or shuffling phase, part of the categories created in phase 2 at each node, are exchanged between the nodes. Finally, in the **fourth phase** (reduce phase), the nodes perform a computation involving the categories each node is responsible for; this is done in a parallel manner.

In more detail, the four phases are described below.

**• Phase 1 - Data Assignment**

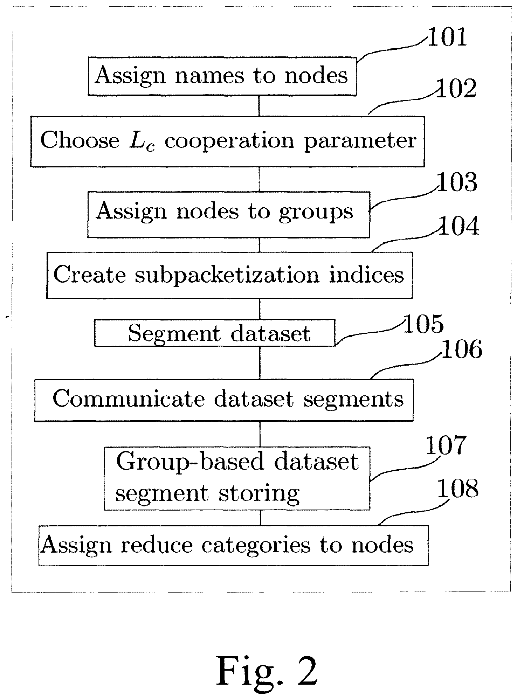

In the first phase, described in Figure 2, the node that has access to the dataset F to be processed, we call it *master node,* splits the dataset into non-overlapping chunks (subpackets) $F_{\sigma,\tau}$ and assigns the chunks to the computing nodes in a proper manner. This process is comprised of the following steps **101-108** to be performed in a first time slot. In a Step **101** names are assigned to nodes. To achieve this, the master node names the computing nodes, for instance by enumerating them. In a Step **102** the cooperation parameter, $L_c$, is chosen by master node. Then, in a Step **103** nodes are assigned to groups by the master node using a grouping function to assign the computing nodes to one of the $\frac{K}{L_c}$ groups. Different groups can generally have different number of nodes, but for clarity, in this specific embodiment, we will consider the special and convenient case where all groups are comprised of exactly $L_c$ nodes. In this specific embodiment, by choosing the enumerating function as a naming function, the grouping function could simply associate nodes $\left\{1, \frac{K}{L_c}+1, \frac{2K}{L_c}+1, \ldots, \frac{(L_c-1)K}{L_c}+1\right\}$ to group 1, nodes $\left\{2, \frac{K}{L_c}+2, \frac{2K}{L_c}+2, \ldots, \frac{(L_c-1)K}{L_c}+2\right\}$ to group 2, and so on. In a next step, Step **104,** master node performs the creation of the subpacketization indices $(\sigma, \tau)$.

Each index pair $(\sigma, \tau)$ is created such that $\sigma \in \{1, 2, \ldots, \frac{t}{L_c}\}$ and $\tau \subset \{1, 2, \ldots, \frac{K}{L_c}\}$, where set $\tau$ has size $|\tau| = \frac{t}{L_c}$. In the here-proposed method, the dataset is divided into many non-overlapping chunks (one option is to have $S^* = \frac{t}{L_c}\binom{K/L_c}{t/L_c}$ chunks), where $t \in \{1, 2, \ldots, K\}$ is a parameter of choice which could be provided as an input of the program or which can be calculated by some optimization algorithm. In a Step **105** the dataset is segmented into smaller subsets $F_{\sigma,\tau}$ according to the indices $(\sigma, \tau)$ that have been created in the previous step. In sequence, in a Step **106**, the master node communicates the chunks to the computing nodes, while the nodes store chunks as a function of the group they belong to. The transmission can be broadcast, multicast or partial unicast. The next step, Step **107,** of this process consists of a group-based storing of the transmitted chunks. In this particular embodiment, any node in group $G_i$, stores $\{F_{\sigma,\tau}, \sigma \in \{1, 2, \ldots, \frac{K}{L_c}\}, i \in \tau\}$, i.e., each node of a certain group $G_i$, stores all subpackets (chunks) $F_{\sigma,\tau}$ whose $\tau$ index includes the number $i$ (this is one option that is based on clique-coverings: other options for such data assignments can also readily be applied and be covered by our invention, without much difficulty, and these can include other methods that facilitate memory-aided multicasting, like those based on placement-delivery arrays, hypergraph codes, and others).

Finally in a Step **108,** a process $R$ assigns each of the $Q$ categories to one of the nodes. Specifically such a process $R$ will tell us that in the reduce phase, node $G_i(k)$ will reduce all the mapped data belonging to the categories in the set $r_{G_i(k)}$ (we recall that $r_{G_i(k)}$ denotes the set of all categories assigned to node $G_i(k)$, and that $r_{G_i(k)}(j)$ denotes the $j$-th category corresponding to the set $r_{G_i(k)}$) In the here described embodiment, for the sake of simplicity, we set $Q = K$, and we assume (again for simplicity, but without considering this to be a limiting assumption) that each node $G_i(k)$ is assigned only one category $r_{Gi(k)}$ (i.e., that $|r_{Gi(k)}|=1$); for example Server 1 is assigned category 1, Server 2 is assigned category 2, and so on.

**• Phase 2 - Data Mapping**

In a second time slot, the computing nodes perform a pre-processing computation, referred to here as the *mapping phase,* on the subpackets of data that they have stored in their memory at the end of the data assignment phase. The nature of the pre-processing function is not of interest here, and our method can be used for any conceivable such function. There could be one or more functions, which, when applied to each chunk, generate $Q$ (here $Q = K$) subpacket-related categories, i.e., $Q$ categories for each of the assigned segments, which are denoted by $f^i_{\sigma,\tau}$ where $i \in \{1, 2, \ldots, Q\}$. To clarify, $f^i_{\sigma,\tau}$ refers to the $i$th category output of the mapping phase of subpacket $F_{\sigma,\tau}$ Each node generates all categories $i = \{1, 2, \ldots, Q\}$, for all chunks $F_{\sigma,\tau}$ that that specific node had been assigned.

**• Phase 3 - Data Exchange**

In a third (shuffling) phase, nodes - in this particular embodiment - have to communicate the contents of each subset-specific category that was created in phase 2, except for those categories that the nodes will use at the next phase, i.e., in the reduce phase. Here we recall that in phase 2, each node $G_i(k)$ has mapped each chunk $F_{\sigma,\tau}$ into $Q = K$ categories (outputs) $f_{\sigma,\tau}^{i}$, $i \in \{1,2, ..., Q\}$ that are of interest to the other nodes but, also recall that there are some categories $r_{G_i(k)}$ that this node itself is responsible for (here, without limiting, we assume that $r_{G_i(k)}$ holds just one category).

Hence, a given node $G_i(k)$ needs to get the mapped data from $f_{\sigma,\tau}^{r_{G_i(k)}}$, for $\sigma \in \{1,2, ..., \frac{t}{L_c}\}$, $\tau \subset \{1,2, ..., \frac{K}{L_c}\}$, $|\tau| = \frac{t}{L_c}$. Nevertheless, recall that the node (by virtue of the fact that it belongs to the $i$th group) already has $f_{\sigma,\tau}^{r_{G_i(k)}}$, $i \in \tau$, so that node $G_i(k)$ has to receive, in this data exchange phase, all $f_{\sigma,\tau}^{r_{G_i(k)}}$ ($i \in \tau$) from the other computing nodes. The exchange of information is comprised of the following steps.

**Process that leads to the transmission of the categories**

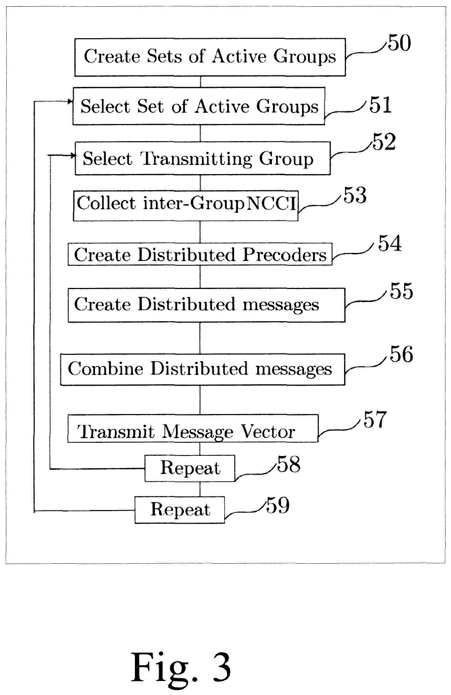

This process is performed in the third time slot and consists of a sequence of 10 steps named as steps **50-59** as illustrated in Figure 3. In a Step **50,** the process proceeds with the creation of Sets of Actives Groups. It is decided which groups will be involved in the upcoming transmission (active groups). To be precise, in this step, sets $\chi \subset \left\{G_1, ..., G_{\frac{K}{L_c}}\right\}$ of $|\chi| = N + 1$ active groups are created. We denote with $X$ the set of all sets $\chi$. In a particular application, the size of the set $\chi$ could be $|\chi| = \frac{t}{L_c} + 1,$ but this is not limiting. After the completion of Step 50, in a Step **51,** the set of Active Groups is selected. To achieve this, the sets $\chi$ are picked, e.g. sequentially, from the set X *of all possible (N + 1)-tuples* $\chi$. When a given set $\chi$ is chosen, it automatically identifies the $(N + 1)$ groups, and thus the $(N + 1) \times L_c$ nodes involved in a given transmission-reception. Once a set $\chi$ is chosen, in-a Step **52** dedicated to the Selection of the Transmitting Group, one group from the set $\chi$ is chosen to be the transmitting group, to the remaining $N$ receiving groups.

Then, in a Step **53,** the inter-Group CSI is collected. In this respect, the transmitting group $G_j \in \chi$ gathers the information on the network coding coefficients corresponding to the remaining $N$ active groups, which correspond to $N$ network coding matrices each of dimensions $L_c \times L_c$, i.e., the network coding coefficient information between the nodes in the transmitting group and those in the $N$ selected groups. In the following Step **54,** Distributed Precoders are created : the nodes of the transmitting group create a distributed precoder, which could be for example (but is not limited to) an inverse of the network coefficient matrix, for each of the channels of the $N$ groups. We denote the precoder designed for the channel $H_{G_j, G_i}$ as $H_{G_j G_i}^{\perp},$ where again $H_{G_j, G_i}$ denotes the "channel" between the transmitting group $G_j$, and a receiving group $G_i$. Then, in a Step **55,** the process proceeds with the creation of Distributed Messages: the transmitting nodes of group $G_j$ multiply each precoder with the message vector

$$f_{G_i}(\chi) \stackrel{\text{def}}{=} \left[ f_{\chi \setminus G_i}^{r_{G_i(1)}}, f_{\chi \setminus G_i}^{r_{G_i(2)}}, ..., f_{\chi \setminus G_i}^{r_{G_i(L)}} \right]$$

intended for the particular group $G_i$, thus creating vector $H_{G_j, G_i}^{\perp} \cdot f_{G_i}(\chi).$ To clarify, $\left[ f_{\chi \setminus G_i}^{r_{G_i(1)}}, f_{\chi \setminus G_i}^{r_{G_i(2)}}, ..., f_{\chi \setminus G_i}^{r_{G_i(L)}} \right]$ are the intermediate results obtained in the map phase by group $G_j$ which are wanted

by group $G_j$, so for example, $f_{\chi \backslash G_i}^{r_{G_i(1)}}$ represents the intermediate result obtained in the map phase by each node of group $G_j$, and which is wanted by the first node of group $G_i$.

Then the same is done for all other groups, thus creating $N$ vectors $H_{G_j,G_i}^{\perp} \cdot f_{G_i}(\chi)$, $i \in \chi \backslash G_j$. Then these vectors (precoded messages) are combined in a Step **56** entitled "Combine Distributed Messages", by creating - for example - a linear combination of those vectors, in, for example, the form

$$X_{G_j,\chi \backslash G_j} = \sum_{G_i \in \chi \backslash G_j} H_{G_j,G_i}^{\perp} \cdot f_{G_i}(\chi).$$

All the N message vectors that are combined together are such that each of them is intended for a specific group and each of them is known already by the other $N$ - 1 groups, which have mapped it already and have it stored.

To clarify, each vector $(H_{G_j,G_i}^{\perp} \cdot f_{G_i}(\chi))$ is intended for group $G_i$, but is already known at all the nodes of all the groups $G_k \in \chi \backslash G_i$. This fact that all nodes in these groups know the values of these vectors, is a direct result of the invented grouping method and it will result in a communication speedup.

Then, in a Step **57,** the Message Vector is transmitted by Group $G_j$ Which transmits the generated vector $X_{G_j,\chi \backslash G_j}$. In a Step **58** the process is repeated from Step 52 by choosing, if required by the specific implementation, a new transmitting group from the set $\chi$. In a standard, basic implementation of the process all nodes in the set $\chi$ are eventually chosen to be the transmitting group. Finally, in a Step **59,** the process is repeated for all possible sets $\chi \in X$.

**Process of decoding at the receiving nodes**

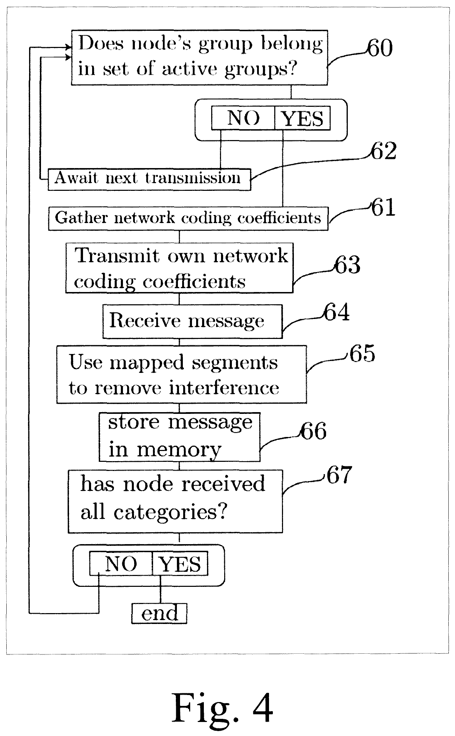

With respect to Figure 4 there will now be described a process - which is presented here from the point of view of any one node - for decoding at the receiving nodes and which comprises the steps **60-67** in sequence.

A first step, **Step 60** consists of having each node check if the node's group belongs in the set $\chi \backslash G_j$ of active receiving groups, where in this case $G_j \in \chi$ is the transmitting group.

If the node belongs to the group $\chi \backslash G_j$ (i.e., if the node is an active receiver), the process proceeds with a Step **61** otherwise with a Step **62**. If the node does not belong in the set of active receivers, then in Step **62** it awaits for the next transmission. Else, if it belongs in the upcoming reception (active receiver), then in Step **61,** the node gathers the necessary network coding matrices between the transmitting group and the other $N$ - 1 active groups from $\chi$ (this can involve for example, pilot training, and the information can be in the form of composite precoder-channel matrices), and in a Step **63** the node transmits its own network coding coefficients - NCCI - corresponding to the channel between the receiver and the transmitting group. In a next **step 64** the node receives a message. Then, in a Step **65,** the mapped segments are used to remove interference. To achieve this, the node proceeds to decode the received message by removing the unwanted interference intended for the nodes in other groups by using a) the network coding coefficients information that was exchanged in Step 61 and 63 and, also by using b) the categories that the node has computed in the mapping phase. We remind here that interference caused by messages intended for users in the same group (intra-group interference) is resolved by the use of the precoding matrix at the transmitter.

To clarify, at a group level, a given receiving group $G_k$ calculates

$$\sum_{G_i \in \chi \backslash \{G_j,G_k\}} H_{G_j,G_i}^{\perp} \cdot f_{G_i}(\chi)$$

and subtracts it from the received signal (recall: any such node in group $G_k$ has both the NCCI/precoder information in the above expression, as well as - due to invented data allocation-and-mapping method - also has all the information $f_{G_i}(\chi)$, $G_i \in \chi \backslash \{G_j,G_k\}$.) Hence, at a group level, the received (noise here is ignored for brevity) signal, after subtraction of the above combination, takes the form

$$\boldsymbol{y} = H_{G_j,G_k} \cdot H_{G_j,G_k}^{\perp} \cdot \boldsymbol{f}_{G_k}(\chi)$$

which, by standard choices of precoding matrices $H_{G_j,G_k}^{\perp}$, can be free (or approximately free) of inter-group interference. We here clarify that by saying "at a group level" we refer to the fact that the $i$-th node of the group, can calculate the $i$-th element of the above vector.

In a Step **66,** the message is stored in the node's memory in order to be used in the reduce phase. In a Step **67,** a test is performed to determine whether the node has received all remaining chunk-categories. If the node has received all categories, then the process ends , otherwise it repeats the process from the beginning.

• **Phase 4 - Reduce**

In a fourth time slot, the reduce phase takes place. Here, the computing nodes merge all chunks of the same category and perform the requested task in a completely parallel manner.

**Analysis**

By comparing the number of chunks $S_1 = t\binom{K}{t}$ required in the aforementioned state-of-art and the number of chunks $S^* = \frac{t}{L_c}\binom{K/L_c}{t/L_c}$ in the here proposed method, we can note that

$$\frac{S_1}{S^*} = \frac{t \cdot \binom{K}{t}}{\frac{t}{L_c} \cdot \binom{K/L_c}{t/L_c}} \approx L_c \cdot \left(\left(\frac{1}{\gamma}\right)^{\frac{L_c-1}{L_c}}\right)^t$$

and can thus deduce that, for a fixed parameter $t$, the number of required chunks is now exponentially smaller compared to the state-of-art algorithm.

To further understand the above process, we will use the following illustrative example.

**Example based on the first embodiment:** Assume $K$ = 16 wired nodes with single output interfaces, being assigned the task of sorting a set of $1.2 \cdot 10^4$ real numbers belonging in the range of (0,1600]. There will be $Q$ = 16 categories, where the first category will involve numbers (0,100], the second category the numbers (100,200], and so on. In the end - during the reduce phase - the first user will be responsible to sort the first category (i.e., to sort all numbers in the dataset, that are between 0 and 100), the second user will be responsible to sort the numbers between 100 and 200, and so on.

If we assume that the chosen parameter is $t$ = 8 for this setup, we can see that the state-of-art, which does not involve any grouping and node coordination, requires that the number of chunks should be $S_1 = t \cdot \binom{K}{t} \approx 10^5$ chunks for the above gains to be achieved in the communication phase, hence making it infeasible to achieve the gain of $t$ = 8 (a delay reduction by a factor of 8) in the communication phase, simply because - for the algorithm to run - it needs more chunks than the actual numbers in the dataset. On the other hand, in the here proposed method, we will see that, by choosing the cooperation parameter to be $L_c$ = 4 (4 nodes per group), the subpacketization will be reduced to $S^* = \frac{t}{L_c}\binom{K/L_c}{t/L_c} = 2 \cdot \binom{4}{2} = 12$ chunks which will automatically allow the aforementioned gains.

• **Phase 1 - Data Assignment**: Initially, the dataset F(present at some master node) comprised of the $1.2 \cdot 10^4$ numbers, is segmented into 12 non-overlapping chunks, where each chunk is named using two indices as follows

$$F_{\sigma,\tau}, \quad \sigma \in \left\{1, \dots, \frac{t}{L_c}\right\} = \{1,2\}, \quad \tau \subset \left\{1, \dots, \frac{K}{L_c}\right\} = \{1,2,\dots,4\}, |\tau| = \frac{t}{L_c} = 2.$$

Specifically, the chunk indices created are $(\sigma, \tau) \in \{(1,\{1,2\}),(2,\{1,2\}),(1,\{1,3\}),(2,\{1,3\})(1,\{1,4\}),(2,\{1,4\}),(1,\{2,3\}),$ $(2,\{2,3\}),(1,\{2,4\}),(2,\{2,4\}),(1,\{3,4\}),(2,\{3,4\})\}$. It can be seen that the second index is a set comprised of $\frac{t}{L_c} = 2$ numbers, creating all possible combinations of two distinct numbers from the set $\{1,2,3,4\}$. Then, nodes are divided into $\frac{K}{L_c} = 4$ groups, such that in each group there are $L_c = 4$ nodes. We adopt here, in our example, the following assignment of nodes to groups:

$$G_1 = \{1,5,9,13\}, G_2 = \{2,6,10,14\}, G_3 = \{3,7,11,15\}, G_4 = \{4,8,12,16\}.$$

After nodes are assigned to a group, the chunks are sent (by the master node) to the $K = 16$ nodes, and each node $G_i(k)$ stores the following chunks

$$G_i(k) \leftarrow \{F_{\sigma,\tau}: \sigma \in \{1,2\}, \ \tau \ni i \}.$$

So for example, each node of the second group $G_2$ (i.e. $i = 2$) would be assigned chunks

$$F_{1,\{1,2\}}, F_{1,\{2,3\}}, F_{1,\{2,4\}}, F_{2,\{1,2\}}, F_{2,\{2,3\}}, F_{2,\{2,4\}}.$$

We recall that, as mentioned in the description of the embodiment, intra-group dataset assignment is correlated; in this particular example, we choose that intra-group dataset assignment is identical, thus nodes belonging in the same group receive exactly the same chunks for processing.

- **Phase 2 - Mapping:** In the mapping phase, each node acts on each chunk that has been assigned to that node in Phase 1. In particular, a node for each of its chunks will create $Q = K = 16$ chunk-specific categories as follows. For any one chunk, say chunk $F_{\sigma,\tau}$ the following categories are created $f^1_{\sigma,\tau}, f^2_{\sigma,\tau}, \dots, f^{16}_{\sigma,\tau}$ such that category $f^1_{\sigma,\tau}$ will be filled with all numbers of chunk $F_{\sigma,\tau}$ which belong in the range $(0,100]$, category $f^2_{\sigma,\tau}$ will be filled with all numbers of chunk $F_{\sigma,\tau}$ which belong in the range $(100,200]$, and so on. This mapping process happens in all nodes and for each chunk that has been assigned to these nodes.

- **Phase 3 - Communication:** In this phase the objective is for the nodes to exchange the different categories created in Phase 2, such that node $k \in \{1,2,\dots,K\}$ can receive all $f^k_{\sigma,\tau}, \sigma \in \{1,2\}, \tau \subset \{1,2,3,4\}, |\tau| = 2$. To this end, initially nodes exchange network-coding coefficients, Then, the nodes of a group cooperate and transmit some categories of interest to all nodes in some $\frac{t}{L_c} = 2$ other groups at a time. Specifically, the transmissions that take place are (order here does not matter):

**Group 1 transmits:**

$$X_{G_1,\{G_2,G_3\}} = H^{\perp}_{G_1,G_2} \cdot \left[f^2_{1,13}, f^6_{1,13}, f^{10}_{1,13}, f^{14}_{1,13}\right]^T + H^{\perp}_{G_1,G_3} \cdot \left[f^3_{1,12}, f^7_{1,12}, f^{11}_{1,12}, f^{15}_{1,12}\right]^T,$$

$$X_{G_1,\{G_2,G_4\}} = H^{\perp}_{G_1,G_2} \cdot \left[f^2_{1,14}, f^6_{1,14}, f^{10}_{1,14}, f^{14}_{1,14}\right]^T + H^{\perp}_{G_1,G_4} \cdot \left[f^4_{1,12}, f^8_{1,12}, f^{12}_{1,12}, f^{16}_{1,12}\right]^T,$$

$$X_{G_1,\{G_3,G_4\}} = H^{\perp}_{G_1,G_3} \cdot \left[f^3_{1,14}, f^7_{1,14}, f^{11}_{1,14}, f^{15}_{1,14}\right]^T + H^{\perp}_{G_1,G_4} \cdot \left[f^4_{1,13}, f^8_{1,13}, f^{12}_{1,13}, f^{16}_{1,13}\right]^T.$$

**Group 2 transmits:**

$$X_{G_2,\{G_1,G_3\}} = H^{\perp}_{G_2,G_1} \cdot \left[f^1_{1,23}, f^5_{1,23}, f^9_{1,23}, f^{13}_{1,23}\right]^T + H^{\perp}_{G_2,G_3} \cdot \left[f^3_{2,12}, f^7_{2,12}, f^{11}_{2,12}, f^{15}_{2,12}\right]^T,$$

$$X_{G_2,\{G_1,G_4\}} = H^{\perp}_{G_2,G_1} \cdot \left[f^1_{1,24}, f^5_{1,24}, f^9_{1,24}, f^{13}_{1,24}\right]^T + H^{\perp}_{G_2,G_4} \cdot \left[f^4_{2,12}, f^8_{2,12}, f^{12}_{2,12}, f^{16}_{2,12}\right]^T,$$

$$X_{G_2,\{G_3,G_4\}} = H^{\perp}_{G_2,G_3} \cdot \left[f^3_{1,24}, f^7_{1,24}, f^{11}_{1,24}, f^{15}_{1,24}\right]^T + H^{\perp}_{G_2,G_4} \cdot \left[f^4_{1,23}, f^8_{1,23}, f^{12}_{1,23}, f^{16}_{1,23}\right]^T.$$

**Group 3 transmits:**

$$X_{G_3,\{G_1,G_2\}} = H^{\perp}_{G_3,G_1} \cdot \left[f^1_{2,23}, f^5_{2,23}, f^9_{2,23}, f^{13}_{2,23}\right]^T + H^{\perp}_{G_3,G_2} \cdot \left[f^2_{2,13}, f^6_{2,13}, f^{10}_{2,13}, f^{14}_{2,13}\right]^T,$$

$$X_{G_3,\{G_1,G_4\}} = H^{\perp}_{G_3,G_1} \cdot \left[f^1_{1,34}, f^5_{1,34}, f^9_{1,34}, f^{13}_{1,34}\right]^T + H^{\perp}_{G_3,G_4} \cdot \left[f^4_{2,13}, f^8_{2,13}, f^{12}_{2,13}, f^{16}_{2,13}\right]^T,$$

$$X_{G_3,\{G_2,G_4\}} = H^{\perp}_{G_3,G_2} \cdot \left[f^2_{1,34}, f^6_{1,34}, f^{10}_{1,34}, f^{14}_{1,34}\right]^T + H^{\perp}_{G_3,G_4} \cdot \left[f^4_{2,23}, f^8_{2,23}, f^{12}_{2,23}, f^{16}_{2,23}\right]^T.$$

**Group 4 transmits:**

$$X_{G_4,\{G_1,G_2\}} = H^{\perp}_{G_4,G_1} \cdot \left[f^1_{2,24}, f^5_{2,24}, f^9_{2,24}, f^{13}_{2,24}\right]^T + H^{\perp}_{G_4,G_2} \cdot \left[f^2_{2,14}, f^6_{2,14}, f^{10}_{2,14}, f^{14}_{2,14}\right]^T,$$

$$X_{G_4,\{G_1,G_3\}} = H^{\perp}_{G_4,G_1} \cdot \left[f^1_{2,34}, f^5_{2,34}, f^9_{2,34}, f^{13}_{2,34}\right]^T + H^{\perp}_{G_4,G_3} \cdot \left[f^3_{2,14}, f^7_{2,14}, f^{11}_{2,14}, f^{15}_{2,14}\right]^T,$$

$$X_{G_4,\{G_2,G_3\}} = H^{\perp}_{G_4,G_2} \cdot \left[f^2_{2,34}, f^6_{2,34}, f^{10}_{2,34}, f^{14}_{2,34}\right]^T + H^{\perp}_{G_4,G_3} \cdot \left[f^3_{2,24}, f^7_{1,24}, f^{11}_{2,24}, f^{15}_{2,24}\right]^T.$$

Note that in the above, for brevity of presentation, we have removed the comma from the double index $\tau$, so for example, when we say $f^6_{2,34}$, we refer to $f^6_{2,\{3,4\}}$, which- we recall - represents the (ordered) numbers inside chunk $F_{2,34} \stackrel{\text{def}}{=} F_{2,\{3,4\}}$ that are in category 6, i.e., the numbers in $F_{2,34}$ that are in the range (500,600]),.

After transmitting the above, we can see that each node has access to all the elements of the category that was originally assigned to it, thus the communication phase is completed. For example, let us assume that node6 is assigned category 6, then in the end, node 6 must collect all $f_{\sigma,\tau}^6$ , for all possible $\sigma,\tau$, i.e., for all $(\sigma,\tau) \in$ {(1,{1,2}),(2,{1,2}),(1,{1,3}),(2,{1,3}) (1,{1,4}),(2,{1,4}),(1,{2,3}),(2,{2,3}),(1,{2,4}),(2,{2,4}),(1,{3,4}),(2,{3,4})}.

Given though that node 6 belongs in group $G_2$ (second group), that node will need to only receive $f_{\sigma,\tau}^6$ for all $\tau$ such that $2 \notin \tau$, i.e., for all $\tau$ that do not include 2. Hence during communication, node 6 will need to receive $f_{\sigma,\tau}^6$ for all $(\sigma,\tau) \in$ {(1,{1,3}),(2,{1,3}),(1,{1,4}),(2,{1,4}),(1,{3,4}),(2,{3,4})}. This is achieved by the aforementioned transmission.

- **Phase 4 - Reduce:** Following the shuffling phase, each node has access to all the numbers of its category; for example, Node 1 has access to all the numbers of the original vector that belong in the range (0,100], Node 2 has access to all the numbers of the original vector that belong in the range (100,200] and so on. That means that, each node can perform the process of reducing, in this particular example sorting, in a completely parallel manner; then the final sorted vector will be the concatenation of the sorted vectors from all 16 nodes.

**Example of impact of our invented solution in this embodiment.** Consider in this example the case where the number of computing nodes is $K = 400$, and where we aim for *target* redundancy (theoretical communication gain) of $t = K\gamma = 20$. For the state-of-art (coded) mapping and communication algorithm (CMR), to achieve this redundancy (and thus to achieve the reduction of the shuffling phase by a factor of $t = 20$), would require subpacketization equal to

$$S = 20 \cdot \binom{400}{20} \approx 10^{34}$$

different subpackets (each data set would have to be split into more $10^{34}$ smaller pieces).

Assume now that the dataset size allows for a maximum subpacketization of $S_{max} \approx 10^7$. If we were to use this state-of-art CMR method, we would need to (as stated before) limit coded communication to include coding that spans only $\bar{K}$ users at a time such that $\bar{K}\gamma\left(\dfrac{\bar{K}}{\bar{K}\gamma}\right) < S_{max}.$ This would imply $\bar{K} = 80$ and a reduced gain of $\bar{t} = \bar{K}\gamma = 80 \cdot \dfrac{20}{400} = 4$ (i.e., 5 times less than what theory implied).

On the other hand, the mapping and shuffling methods that we have invented, allow us (without an additional cost of exchanging mapped data between the nodes in order to facilitate cooperation) to employ node cooperation with $L_c = 5$ (forming groups of five nodes each), and to achieve the full desired delay-reduction by a factor of $t = 20$, with a dramatically reduced subpacketization

$$S^* = \frac{20}{5} \cdot \binom{\frac{400}{5}}{\frac{20}{5}} = 4 \cdot \binom{80}{4} \approx 6 \cdot 10^6.$$

Let us now recall that for the original CMR state-of-art method, the total delay takes the form

$$T_{tot}^{CMR} = T_{map} + T_{red} + T_{com} \approx T_m\gamma + T_{red} + T_c\frac{(1-\gamma)}{t} = \frac{1}{20}T_m + T_{red} + T_c\frac{\left(1-\frac{1}{20}\right)}{4}.$$

We see that for $A \stackrel{\text{def}}{=} T_c\dfrac{\left(1-\frac{1}{20}\right)}{4}$ being the total cost of communication, and $B \stackrel{\text{def}}{=} \dfrac{1}{20}T_m + T_{red}$, being the total cost of computation, then the state of art method gives

$$T_{tot}^{CMR} = A + B$$

while for the invented method here we get

$$T_{tot}^* = \frac{A}{L_c} + B = \frac{A}{5} + B.$$

Assuming now, for example, that in the state-of-art CMR method, communication takes 80% of the total resources, i.e., that $A = 4 \cdot B$, then a quick calculation shows that the reduction that we get - as a result of our invented algorithm - in the total execution time is

$$\frac{T_{tot}^{CMR}}{T_{tot}^*} = \frac{A + B}{\frac{A}{L_c} + B} = \frac{A + B}{\frac{A}{5} + B} = \frac{5B}{\frac{9B}{5}} = \frac{25}{9} \approx 3.$$

By switching to our invented algorithm, without any additional assumptions of exchanging mapped data to facilitate cooperation, we get a total speedup in the distributed computing execution time, by a multiplicative factor of approximately 3.

## II. Second embodiment (Wireless D2D Computation)

There will now be described a second embodiment based on a set of $K$ wireless nodes (such as mobile terminals, tablets, drones to name a few) with computing capabilities. These nodes have to execute a given computational job, which requires processing of a big dataset. This can be a job that some master node (such as a base station or a Wi-Fi router for example), wants to execute, and which is offloaded to K wireless nodes for distributed computation. We will focus on jobs that in order to be executed in a distributed fashion, require communication between the nodes; this constitutes the majority of jobs. In this embodiment, the authors will show how a novel assignment of dataset chunks and, also node cooperation, can significantly reduce the total execution time of these algorithms by transforming the communication phase of these algorithms.

State-of-art distributed computation approaches, which make use of dataset chunk replication, require the dataset to be divided into $t\binom{K}{t}$ subpackets (or segments or chunks), where $t$ represents the amount of replication of the dataset across the $K$ nodes. While though, the above subpacketization quantity $t\binom{K}{t}$ grows exponentially with the $K$ (and in generally increases rapidly with $t$) in reality the finite-sized dataset cannot be partitioned in so many chunks. As a consequence, the coded communication methods proposed to overcome the bottleneck associated with communicationin distributed computation, such as Coded MapReduce, reach limited effective gains due to the finite amount of allowable subpacketization, and eventually due to the finite size of the dataset.

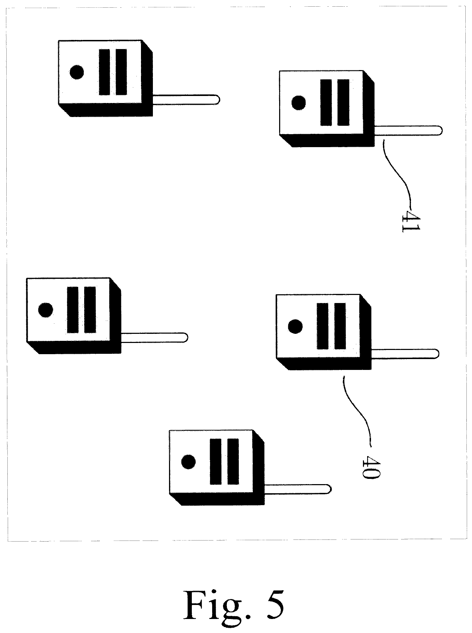

Figure 5 shows the preferred embodiment, where a set of $K$ wireless computing nodes - e.g. a node **40** - which are connected to each other through a wireless medium. Each computing node is equipped with one or more antennas **41**. The here-proposed solution reduces significantly, compared to the state-of-art, the number of sub-datasets that are required for achieving the theoretical speedup gain equal to t in the communication phase, with a consequent big reduction in the overall execution time of the computationally-intensive job. For ease of describing this specific embodiment, we will assume - without limiting the scope of the invention - that all nodes have the same properties (battery life, power, etc.) and that the different channel\link strengths are statistically the same. This need not be the case, and the algorithm can be modified easily to account for different asymmetries.

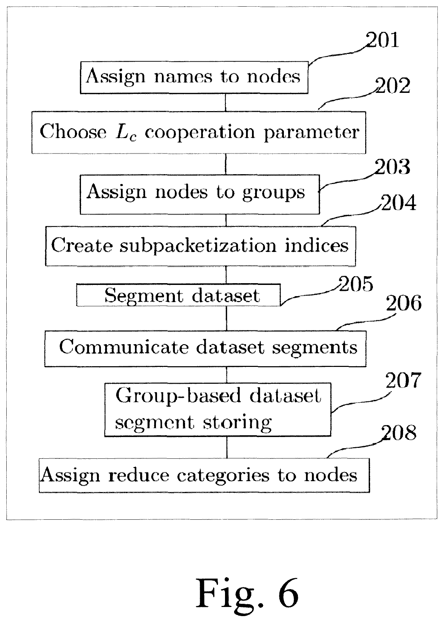

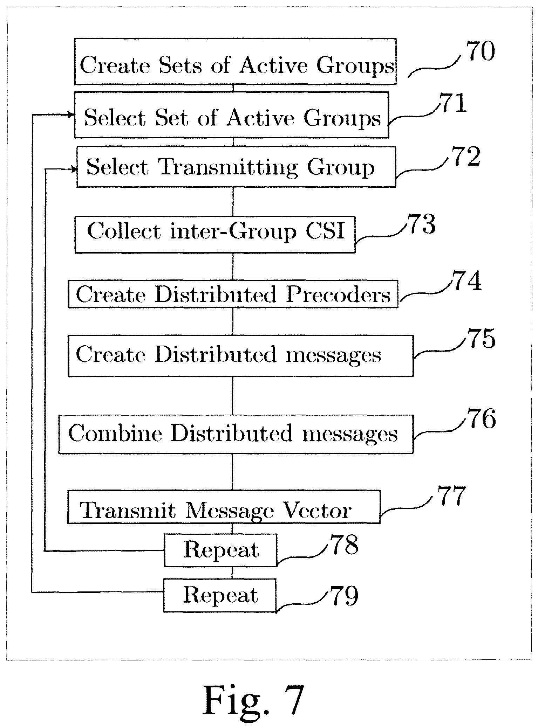

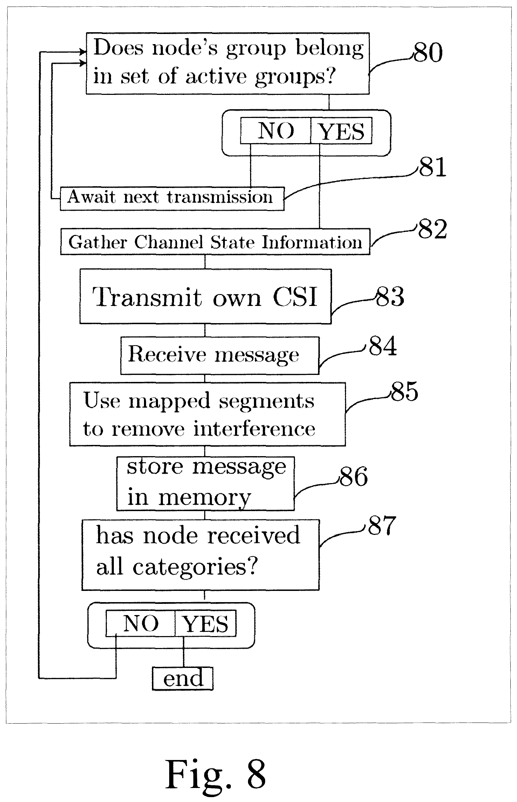

The overall algorithm is comprised of at least five basic processes, encompassing four time slots. First is the process of data assignment, happening in a first time slot, during which the dataset is divided into chunks and is transmitted to the computing nodes (Figure 6). In a second time slot, the map phase takes place, during which the nodes perform a pre-processing step on their assigned data. In a third time slot, the communication (shuffling) phase takes place, which consists of the data exchange between the nodes via a device-to-device (D2D) communication model. In this third time slot, two different processes are present: the one that leads to the transmission of the mapped data (Figure 7), and the other of decoding the data (each node is responsible for) at the receiving nodes (Figure 8). Finally, in the fourth time slot, the nodes perform a computation over their sub-tasks (on the data categories that they are responsible for) in a parallel manner (This latter phase is called the reduce phase).

A more detailed description of the above four phases can be found below.

• **Phase 1 - Data Assignment**

In the first phase, the node that has access to the dataset $F$ to be processed, we call it *master node,* splits the dataset into non-overlapping chunks $F_{\sigma,\tau}$ and assigns the chunks to the computing nodes in a proper manner. This process (Figure 6) is comprised of the following steps **201-208** to be performed in the first time slot, which are quite similar to steps 101-108 described above with respect to the wired embodiment. In a Step **201** the master node names the computing nodes, for instance by enumerating them. In a Step **202** the cooperation parameter, $L_c$, is chosen. Ina following step, Step **203,** the master node uses a grouping function to assign the computing nodes to one of the $\frac{K}{L_c}$ groups. Different groups can generally have different number of nodes, but for clarity, in this specific embodiment, we will consider that all groups are comprised of exactly $L_c$ nodes. In this specific embodiment, by choosing the enumerating function as a naming function, the grouping function could simply associate nodes $\left\{1, \frac{K}{L_c}+1, \frac{2K}{L_c}+1, \ldots, \frac{(L_c-1)K}{L_c}+1\right\}$ to group 1, nodes $\left\{2, \frac{K}{L_c}+2, \frac{2K}{L_c}+2, \ldots, \frac{(L_c-1)K}{L_c}+2\right\}$ to group 2, and so on. The next step, Step **204,** consists of the creation of the subpacketization indices $(\sigma,\tau)$. Each-index -pair $(\sigma,\tau)$ created such that $\sigma \in \{1,2, \ldots, \frac{t}{L_c}\}$ and $\tau \subseteq \{1,2, \ldots, \frac{K}{L_c}\}$, where the set $\tau$ has size $|\tau| = \frac{t}{L_c}$. the here-proposed method, the dataset is divided into many non-overlapping chunks (one option is to have $S^* = \frac{t}{L_c}\binom{K/L_c}{t/L_c}$ chunks), where $t \in \{1,2, \ldots, K\}$ is a parameter of choice which could be provided as an input of the program or be calculated by some optimization algorithm. In a Step **205** the dataset is segmented into smaller subsets, $F_{\sigma,\tau}$ according to the indices $(\sigma,\tau)$ that have been created in the previous step. In sequence, in a Step **206,** the master node communicates the chunks to the computing nodes, while the nodes store chunks as a function of the group they belong to. The transmission can be broadcast, multicast or partial unicast. In a next step, Step **207,** the process proceeds with a group-based storing of the transmitted chunks. In this particular embodiment, any node of group $G_i$ stores $\{F_{\sigma,\tau}$, $\sigma \in \left\{1,2, \ldots, \frac{K}{L_c}\right\}$, $\tau \ni i\}$. In words, this means that each node of a certain group $G_i$, stores all segments (chunks) $F_{\sigma,\tau}$ whose $\tau$ index includes the number $i$ (this is one option that is based on clique-coverings: other options for such data assignments can also readily be applied and be covered by our invention, without much difficulty, and these can include other methods that facilitate memory-aided multicasting, like those based on placement-delivery arrays, hypergraph codes, and others).

Finally, in a Step **208** a process, $R$, assigns each of the $Q$ categories to one of the nodes. Specifically this process lets each node know which category they are eventually responsible for reducing. Thus, in the reduce phase, node $G_i(k)$ will reduce all the mapped data belonging to the categories in the set $r_{G_i(k)}$: we recall that $r_{G_i(k)}$ denotes the set of all categories assigned to node $G_i(k)$, and that $r_{G_i(k)}(j)$ denotes the *j*-th category corresponding to the set $r_{G_i(k)}$. In the here described embodiment, for the sake of simplicity, we set $Q = K$, and we assume (again for simplicity, but without considering this to be a limiting assumption) that each node $G_i(k)$ is assigned only one category $r_{G_i(k)}$ (i.e., that $|r_{G_i(k)}| = 1$); for example Node1 is assigned category 1, Node 2 is assigned category 2, and so on.

• **Phase 2 - Data Mapping**

In the second time slot, the computing nodes perform a pre-processing computation, referred to here as the *mappingphase,* on the subpackets of data that they have stored in their memory at the end of the data assignment phase. The nature of the pre-processing function is not of interest here, and our method can be used for any conceivable such function. There could be one or more functions, which, when applied to each chunk, generate $Q$ (here $Q = K$) subpacket-related categories, i.e., $Q$ categories for each of the assigned segments, which are denoted by $f_{\sigma,\tau}^i$ where $i \in \{1,2, \ldots, Q\}$. To clarify, $f_{\sigma,\tau}^i$ refers to the ith category output of the mapping phase of subpacket $F_{\sigma,\tau}$ Each node generates all categories $i = \{1,2, \ldots, Q\}$, for all chunks $F_{\sigma,\tau}$ that each specific node had been assigned.

**Phase 3 - Data Exchange**

In the third (shuffling) phase, nodes - in this particular embodiment - have to communicate the contents of each subset-specific category that was created in phase 2, except for those categories that the nodes will use at the next phase, i.e., in the reduce phase. Here we recall that in phase 2, each node $G_j(k)$ has mapped each chunk $F_{\sigma,\tau}$ into $Q = K$ categories (outputs) $f^i_{\sigma,\tau}$, $i \in \{1,2, ..., Q\}$ that are of interest to the other nodes but, also recall that there are some categories $r_{Gi(k)}$ that this node itself is responsible for (here, without limiting, we assume that $r_{Gi(k)}$ holds just one category).

Hence, a given node $G_j(k)$ needs to get the mapped data $f^{r_{G_i(k)}}_{\sigma,\tau}$, $\forall \sigma \in \{1,2, ..., \frac{t}{L_c}\}$, $\tau \subset \{1,2, ..., \frac{K}{L_c}\}$, $|\tau| = \frac{t}{L_c}$.

Nevertheless, node $G_j(k)$ already has all $\{ f^{r_{G_i(k)}}_{\sigma,\tau}$, $\tau \ni i\}$ so that node $G_j(k)$ only needs to receive, in this data exchange phase, all $\{ f^{r_{G_i(k)}}_{\sigma,\tau}$, $\tau \not\ni i\}$ from the other computing nodes. In detail, there exist two sub-processes: one taking place in the nodes of the transmitting group and another taking place in the nodes of the receiving groups.

**Process that leads to the transmission of the categories**

This process happens in a third time slot and consists of a sequence of 10 steps **70-79** illustrated in Figure 7 and which are quite similar to steps 50-59 used in the wired embodiment. Initially, in a Step **70** , Sets of Active Group are created. To achieve this, it is decided which groups will be involved in the upcoming transmission (active groups).

To be precise, in this step, sets $\chi \subset \left\{ G_1, ..., G_{\frac{K}{L_c}} \right\}$ of $|\chi| = N + 1$ active groups are created. We denote with $X$ the set of all sets $\chi$. In a particular application the size of the set $\chi$ could be $|\chi| = N = \frac{t}{L_c} + 1,$ but this is not limiting. After completion of step 70, in a Step **71** , the process proceeds to select the Set of Active Groups. In that respect, sets $\chi$ are picked, e.g. sequentially, from the set $X$ *of all possible* $(N + 1)$-*tuples $\chi$.* When a given set $\chi$ is chosen, it automatically identifies the $(N + 1)$ groups, and thus the $(N + 1) \times L_c$ nodes involved in a given transmission-reception. Once a set $\chi$ is chosen, in a Step **72,** the process proceeds to select the Transmitting Group. Thus, one group from the set $\chi$ is chosen to be the transmitting group, while the remaining N groups will be the receiving groups.

At this point, given a set $\chi$ of active groups, in a Step **73** the transmitting group, call it $G_j$, gathers Channel State Information (CSI) from the receiving groups. In particular, the transmitting group gathers information for a total of up to N channel matrices, each of dimensionality $L_c \times L_c$, where these channel matrices correspond to the channel between the nodes of the transmitting group and the nodes of each of the $\frac{t}{L_c}$ selected (receiving) groups. The aforementioned CSI is typically communicated by using training signals that yield the composite precoder+channel coefficients. Such information can also include other aspects such as receiver state information, precoder preference, location information, etc. In a following Step **74,** the nodes of the transmitting group create a distributed precoder, which could be - for example, but not limited to - a Zero Force precoder or an MMSE precoder or a dirty paper precoder, to name a few, for each of the channels of the N receiving groups. We denote the precoder designed for the channel $H_{G_j,G_i}$ as $H^\perp_{G_j,G_i}$, where again $H_{G_j,G_i}$ denotes the channel between the transmitting group $G_j$, and a receiving group $G_i$.

Then, in a Step **75,** the transmitting nodes of group $G_j$ multiply each precoder with the message vector

$$f_{G_i}(\chi) \stackrel{\text{def}}{=} [ f^{r_{G_i(1)}}_{\chi \backslash G_i}, f^{r_{G_i(2)}}_{\chi \backslash G_i}, ..., f^{r_{G_i(L)}}_{\chi \backslash G_i}]$$

intended for the particular group $G_j$, thus creating vector $H^{\perp}_{G_j,G_i} \cdot f_{G_i}(\chi)$. To clarify, $[f^{r_{G_i}(1)}_{\chi\backslash G_i}, f^{r_{G_i}(2)}_{\chi\backslash G_i}, \ldots, f^{r_{G_i}(L)}_{\chi\backslash G_i}]$ are some of the intermediate resutts obtained in the map phase by group $G_j$ which are wanted by group $G_i$, so for example, $f^{r_{G_i}(1)}_{\chi\backslash G_i}$ represents the intermediate result obtained in the map phase by each node of group $G_j$, and which is wanted by the first node of group $G_i$.

Then the same is done for all other groups, thus creating $N$ vectors $H^{\perp}_{G_j,G_i} \cdot f_{G_i}(\chi)$, $\forall i \in \chi\backslash G_j$.

Then these vectors (precoded messages) are combined in Step **76,** by creating - for example - a linear combination of those vectors, in, for example, the form

$$X_{G_j,\chi\backslash G_j} = \sum_{G_i \in \chi\backslash G_j} H^{\perp}_{G_j,G_i} \cdot f_{G_i}(\chi).$$

All the N message vectors that are combined together are such that each of them is intended for a specific group and each of them is known already by the other $N$ - 1 groups, which have mapped it already and have it stored. To clarify, each vector $H^{\perp}_{G_j,G_i} \cdot f_{G_i}(\chi)$ is intended for group $G_i$, is already known at all the nodes of all the groups $G_k$, $G_k \in \chi\backslash G_i$. This fact that all nodes in these groups know the values of these vectors, is a direct result of the invented grouping method, and it will result in communication speedup.

Then, in Step **77** Group $G_j$ transmits the generated vector $X_{G_j,\chi\backslash G_j}$. In a Step **78** the process is repeated from step 72 by choosing, if required by the specific implementation, a new transmitting group from the set $\chi$. In a standard, basic implementation of the process all nodes in the set $\chi$ are eventually chosen to be the transmitting group. Finally, in a Step **79,** the process is repeated for all possible sets $\chi \in X$.

### Process of decoding at the receiving nodes

The process of decoding takes place at each of the nodes and is described here from the view of any one of the nodes. It consists of steps **80-87.** A first step, Step **80,** consists of having each node check if the node's group belongs in the set $\chi\backslash G_j$ of active receiving groups, where in this case $G_j \in \chi$ is the transmitting group. If the node belongs to the upcoming transmission (its group belongs in the set $\chi$) then the process procedes with a Step **81** otherwise with a Step **82.** If the node does not belong in the set of active receivers, then in Step **82** it awaits for the next transmission.

Else, if it belongs in the upcoming reception (active receiver), then in Step **81** the node gathers the necessary channel state information between the transmitting group and the other $N$ - 1 active groups from $\chi$ (this can involve for example, pilot training, and the information can be in the form of composite precoder-channel matrices), and in a Step **83** the node transmits its own channel state information CSI.

In a Step **84** the node receives a message and in a Step **85** interference is removed by using mapped segment. To achieve this, the node proceeds to decode the message by removing the unwanted interference intended for the nodes in other groups by using a) the channel state information that was exchanged in the Steps 81 and 83 and, also by using b) the chunk-related categories that the node has computed in the mapping phase. We remind here that interference caused by messages intended for nodes in the same group (intra-group interference) is resolved by the use of the precoding matrix at the transmitters.

To clarify, at a group level, a given receiving group $G_k$ calculates

$$\sum_{G_i \in \chi\backslash\{G_j,G_k\}} H^{\perp}_{G_j,G_i} \cdot f_{G_i}(\chi)$$

and subtracts it from the received signal (recall: any such node in group $G_k$ has both the CSI/precoder information in the above expression, as well as - due to invented data allocation-and-mapping method - has all the information $f_{G_i}(\chi)$, $G_i \in \chi\backslash\{G_j,G_k\}$.). Hence, at a group level, the received (noise here is ignored for brevity) signal, after subtraction of the above combination, takes the form

$$\boldsymbol{y} = H_{G_j,G_k} \cdot H_{G_j,G_k}^{\perp} \cdot \boldsymbol{f}_{G_k}(\chi)$$

which, by standard choices of precoding matrices $H_{G_j,G_k}^{\perp}$, can be free (or approximately free) of inter-group interference. We here clarify that by saying "at a group level" we refer to the fact that the $i$-th node of the group, can calculate the $i$-th element of the above vector.

In a Step **86,** the message is stored in the node's memory in order to be used in the reduce phase. In a Step **87,** a test is performed to determine if the node has not received all remaining chunk-categories. If the test is positive, i.e. if the node received all chunk-categories, then the process ends and, otherwise, it repeats the process from the beginning.

**• Phase 4 - Reduce**

In a fourth time slot, the reduce phase takes place. Here, the computing nodes merge all chunks of the same category and perform the requested task in a completely parallel manner.

**Analysis**

By comparing the number of chunks $S_1 = t\binom{K}{t}$ required in the aforementioned state-of-art and the number of chunks $S^* = \frac{t}{L_c}\binom{K/L_c}{t/L_c}$ in the here proposed method, we can note that

$$\frac{S_1}{S^*} = \frac{t \cdot \binom{K}{t}}{\frac{t}{L_c} \cdot \binom{K/L_c}{t/L_c}} \approx L_c \cdot \left(\left(\frac{1}{\gamma}\right)^{\frac{L_c-1}{L_c}}\right)^t$$

and can thus deduce that, for a fixed parameter t, the number of required chunks is now exponentially smaller compared to the state-of-art algorithm.

**III. Third embodiment (Wireless, Edge Facilitated Computation)**

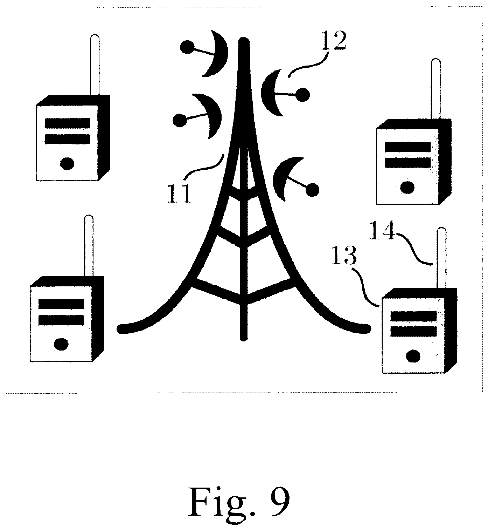

There will now be described a preferred third embodiment illustrated in Figure 9, describing the invented role given to a set of $K$ wireless nodes (**13**) (for example mobile terminals, tablets or drones) with computing capabilities, which nodes can communicate only through the help of some intermediate node (**11**), eg. a wireless router or a base station, and which nodes are assigned some computational task to perform in a parallel manner. The helper node is equipped with $L > 1$ antennas (**12**) and can act as a relay, i.e. it can receive information from the nodes and retransmit the signals it receives, while the nodes have one or more antennas (**14**).

The authors here propose a new algorithm that - by properly splitting and distributing the dataset-to-be-processed among the computing nodes - guarantees significantly better performance in the overall execution time of the jobs than the existing state-of-art algorithms by significantly reducing the communication time required by these algorithms. This new approach comes as a combination of i) a novel assignment of dataset chunks to nodes, ii) the use of node cooperation and iii) multiple antennas at the helper node.

State-of-art distributed computation approaches, which make use of dataset chunk replication, require the initial dataset to be divided into $t\binom{K}{t}$ sub-datasets or segments or chunks, where t represents the degree of replication of the dataset in the $K$ nodes. While though, the above subpacketization quantity $t\binom{K}{t}$ grows exponentially with $K$, in reality the finite-sized dataset generally cannot be partitioned in so many chunks. As a consequence, the coded communication methods proposed to overcome the bottleneck associated with communication in distributed computing, such as Coded MapReduce, reach limited effective gains due to the finite size of the dataset.

The here-proposed solution reduces significantly - compared to the state-of-art - the number of sub-datasets that are required for achieving the theoretical speedup gain equal to t in the communication phase that results in a consequent big reduction in the overall execution time of the computationally-intensive job. For ease of describing this specific embodiment, we will assume - without limiting the scope of the invention - that all nodes have the same properties (battery life, power, etc.) and that the different channel\link strengths are statistically the same. This though need not be the case, and the algorithm can be modified easily to account for different asymmetries.

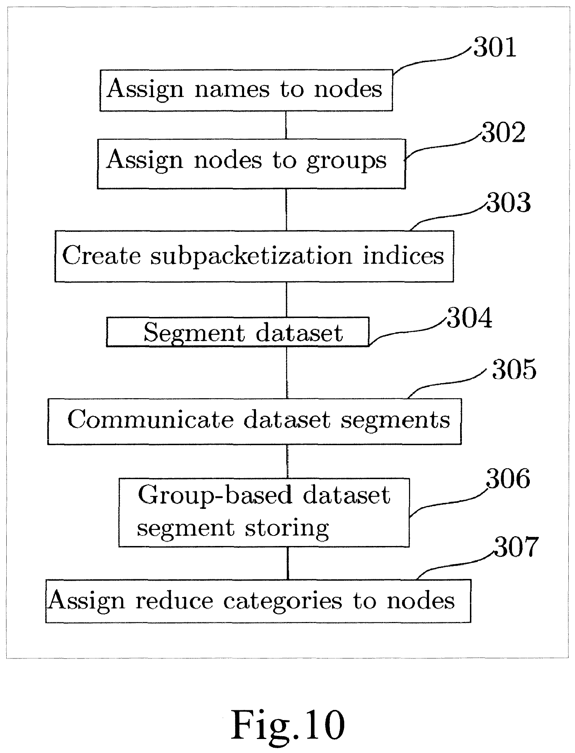

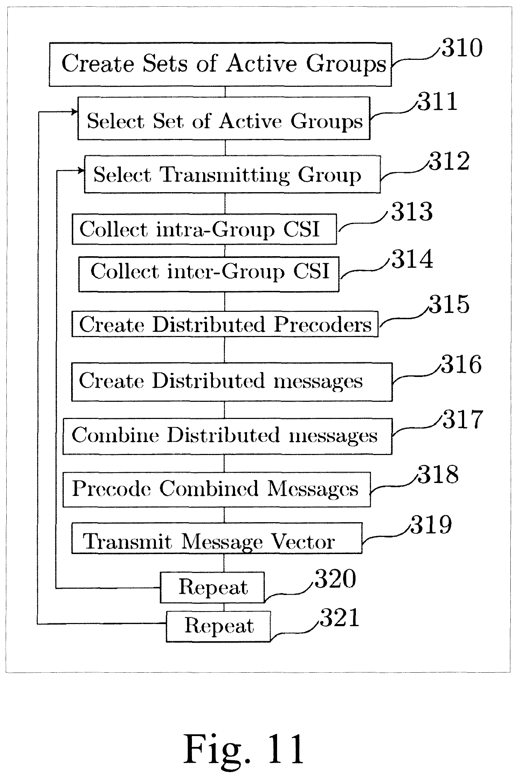

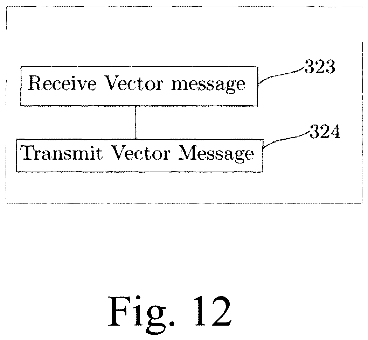

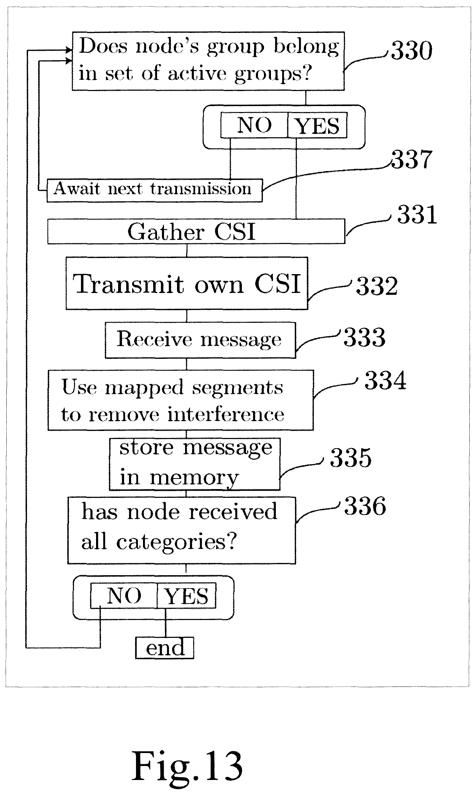

As in many distributed computing models, the overall algorithm is comprised of at least five basic processes, encompassing four time slots. First, the process of data assignment, which takes place in a first time slot, during which the dataset is divided into chunks and is transmitted to the computing nodes (Figure 10). In a second time slot, the mapping phase takes place, during which the nodes perform a pre-processing step on their assigned data. In the third time slot the communication phase takes place, during which the computing nodes wish to exchange - via the wireless edge node - the outputs of the mapping phase. In this time slot, two different processes are present: the one that leads to the transmission of the mapped data and the one of decoding the mapped data at the receiving nodes (Figure 13). The process of transmission is further divided into 2 sub-phases: the uplink transmission from some group of nodes towards the edge node (Figure 11) and the downlink from the edge node to the computing nodes (Figure 12). Finally, in the fourth time slot the reduce phase takes place, during which the nodes perform the computation of their sub-tasks in a parallel manner.

A more detailed description of the four phases can be found below.

• **Phase 1 - Data Assignment**

In the first phase, illustrated in Figure 10, the node or nodes that has access to the dataset F to be processed, we call it *master node,* splits the dataset into non-overlapping chunks $F_{\sigma,\tau}$ and assigns the chunks to the computing nodes in a proper manner. This process is comprised of the following steps **301-307** to be performed in a first time slot. In a step 301 the master node names the computing nodes, for instance by enumerating them. In this embodiment the cooperation parameter is equal to the number of antennas in the transmitter, i.e. $L_c = L$. In the following step, Step **302,** the master node uses a grouping function to assign the computing nodes to one of the $\dfrac{K}{L_c}$ groups. Different groups can generally have different number of nodes, but for clarity, in this specific embodiment, we will consider that all groups are comprised of exactly $L_c$ nodes. In this specific embodiment, by choosing the enumerating function as a naming function, the grouping function could simply associate nodes $\left\{1, \dfrac{K}{L_c} + 1, \dfrac{2K}{L_c} + 1, \dots, \dfrac{(L_c-1)K}{L_c} + 1\right\}$ to group 1 (denoted as $G_1$), nodes $\left\{2, \dfrac{K}{L_c} + 2, \dfrac{2K}{L_c} + 2, \dots, \dfrac{(L_c-1)K}{L_c} + 2\right\}$ to group 2 (denoted as $G_2$), and so on. In a next step, Step **303**, there is provided the creation of the subpacketization indices $(\sigma,\tau)$. Each index pair $(\sigma,\tau)$ is created such that $\sigma \in \left\{1,2,\dots,\dfrac{t}{L_c}\right\}$ and $\tau \subset \left\{1,2,\dots,\dfrac{K}{L_c}\right\}$, where the set $\tau$ has size $|\tau| = \dfrac{t}{L_c}$. In the here-proposed method, the dataset is divided into many non-overlapping chunks (one option is to have $S^* = \dfrac{t}{L_c}\dbinom{K/L_c}{t/L_c}$ chunks), where $t \in \{1,2,\dots,K\}$ is a parameter of choice which could be provided as an input of the program or be calculated by some optimization algorithm. In a Step **304,** the dataset is segmented into subsets $F_{\sigma,\tau}$ according to the indices $(\sigma,\tau)$ that have been created in the previous step. In sequence, in a Step **305,** the master node communicates the chunks to the computing nodes, while the nodes store chunks as a function of the group they belong to. The transmission can be broadcast, multicast or partial unicast and it can employ one or more transmitting antennas. In a next step, Step **306,** the processproceeds with a group-based storing of the transmitted chunks. In this particular embodiment, an ynode of group $G_i$ stores $\{F_{\sigma,\tau}$ $\sigma \in \left\{1,2,\dots,\dfrac{K}{L_c}\right\}$, $\tau \ni i\}$. In words, this means that each node of a certain group $G_i$, stores all segments (chunks) $F_{\sigma,\tau}$ whose $\tau$ index includes the number $i$ (this is one option that is based on clique-coverings: other options for such data assignments can also readily be applied and be covered by our invention, without much difficulty, and these can include other methods that facilitate memory-aided multicasting, like those based on placement-delivery arrays, hypergraph codes, and others).

Finally, in a Step307, a process , R, assigns each of the $Q$ categories to one of the nodes. Specifically, this process lets each node know which category/categories they are eventually responsible for reducing. Thus, in the reduce phase, node $G_i(k)$ will reduce all the mapped data belonging to the categories in the set $r_{G_i(k)}$: we recall that $r_{G_i(k)}$ denotes the set of all categories assigned to node $G_i(k)$, and that $r_{G_i(k)}(j)$ denotes the $j$-th category corresponding to the set $r_{G_i(k)}$. In the here described embodiment, for the sake of simplicity, we set $Q = K$, and we assume (again for simplicity, but without considering this to be a limiting assumption) that each node $G_i(k)$ is assigned only one category $r_{G_i(k)}$ (i.e., that $|r_{G_i(k)}| = 1$); for example Server 1 is assigned category 1, Server 2 is assigned category 2, and so on.

**• Phase 2 -Mapping Phase**

In the second time slot, the computing nodes perform a pre-processing computation, referred to here as the *mapping phase,* on the chunks of data that they have stored in their memory at the end of the data assignment phase. The nature of the pre-processing function is not of interest here, and our method can be used for any conceivable such function. There could be one or more functions, which, when applied to each chunk, generate $Q \geq K$ (here $Q = K$) chunk-related categories, i.e., $Q$ categories for each of the assigned segments, which are denoted by $f^i_{\sigma,\tau}$ where $i \in \{1,2, ..., Q\}$. To clarify, $f^i_{\sigma,\tau}$ refers to the $i$th category output of the mapping phase of chunk $F_{\sigma,\tau}$. Each node generates all categories $i = \{1,2, ..., Q\}$, for all chunks $F_{\sigma,\tau}$ that each specific node had been assigned.

**• Phase 3 - Data Exchange**

In the third (shuffling) phase (Figure 11), nodes - in this particular embodiment - have to communicate the contents of each subset-specific category that was created in phase 2, except for those categories that the nodes will use at the next phase, i.e., in the reduce phase. Here we recall that in phase 2, each node $G_i(k)$ has mapped each chunk $F_{\sigma,\tau}$ into $Q = K$ categories (outputs) $f^i_{\sigma,\tau}$, $i \in \{1,2, ..., Q\}$ that are of interest to the other nodes but, also recall that there are some categories $r_{G_i(k)}$ that this node itself is responsible for (here, without limiting, we assume that $r_{G_i(k)}$ holds just one category).

Hence, a given node $G_i(k)$ needs to get the mapped data from $f^{r_{G_i(k)}}_{\sigma,\tau}$, for $\sigma \in \{1,2, ..., \frac{t}{L_c}\}$, $\tau \subset \{1,2, ..., \frac{K}{L_c}\}$, $|\tau| = \frac{t}{L_c}$. Nevertheless, node $G_i(k)$ already has all necessary $\{f^{r_{G_i(k)}}_{\sigma,\tau} : i \in \tau\}$ so that node $G_i(k)$ only needs to receive, in this data exchange phase, all necessary $\{f^{r_{G_i(k)}}_{\sigma,\tau} : i \notin \tau\}$ from the other computing nodes.

Since the nodes are not connected to each other, their communication is facilitated via the edge node. This implies that when a node or nodes transmits/transmit a message, it/they has/have to transmit to the edge node, which in turn re-transmits to the intended nodes. In order to describe better this phase we can look separately at the three processes that take place, namely i) the transmission from the computing nodes to the edge node ii) the transmission from the edge node to the computing nodes and iii) the decoding taking place at the computing nodes.

**Process that leads to the transmission of the categories in the uplink**

This process happens in a third time slot and consists of a sequence of 12 steps **310-321**(Figure 11).Initially, in a Step **310**,the sets of Active Groups are created. To achieve this it is decided which groups will be involved in the upcoming transmission (active groups). To be precise, in this step, sets $\chi \subset \left\{ G_1, ..., G_{\frac{K}{L_c}} \right\}$ of $|\chi| = N + 1$ active groups are created. We denote with $X$ the set of all sets $\chi$. In a particular application, the size of the set $\chi$ could be $|\chi| = \frac{t}{L_c} + 1$,

but this is not limiting. After the completion of step 310, in a Step **311,** the process proceeds with the selection of the Set of Active Group. In that respect, sets $\chi$ are picked, e.g. sequentially, from the set $X$ *of* all $(N + 1)$ *-tuples* $\chi$. When a given set $\chi$ is chosen, it automatically identifies the *(N + 1)* groups, and thus the $(N + 1) \times L_c$ nodes involved in a given transmission-reception. Once a set $\chi$ is chosen, in a Step **312,**one group from the set $\chi$ is chosen to be the transmitting group to the remaining $N$ groups.

At this point, in a Step **313** the intra-Group Channel State Information CSI is collected. In that respect, the transmitting group $G_j$, gathers the uplink channel matrix $H_{G_j,BS}$ between $G_j$ and the base station. Ina Step **314,** the inter-Group CSI is collected. This is achieved by the transmitting group $G_j$ which gathers the channel state information of N channel matrices each of dimension $L_c \times L_c$, each one corresponding to the downlink channel from the Base Station to the nodes of each group in $\chi$. The CSI is typically communicated by using training signals that yield the composite precoder+channel coefficients. Such information can also include other aspects such as receiver state information, precoder preference, location information, etc. In a next step **315)** the process proceeds with the creation of Distributed Precoders. In that respect, the nodes of the transmitting group create a distributed precoder, for each of the messages intended for the $\frac{t}{L_c}$ groups. We denote the precoder designed for the channel, $H_{G_j,BS}$ as $H^{\perp}_{G_j,BS}$ , where again $H_{G_j,BS}$ denotes the uplink channel between the transmitting group $G_j$ and the Base Station. On the other hand, we denote as $H^{\perp}_{BS,G_k}$, the precoder designed for the downlink channel $H_{BS,G_k}$ between the Base Station and group $G_k$. Then in a Step **316,** Distributed messages are created. To achieve this, the transmitting nodes create $N$ distributed vectors each of size $L_c$, constructed by multiplying each precoder by the message intended for the group the precoder was built for. The precoded message intended for group $G_i$, takes the form

$$H^{\perp}_{BS,G_i} \cdot f_{G_i}(\chi)$$

where $f_{G_i}(\chi) \overset{\text{def}}{=} [f^{r_{G_i(1)}}_{\chi \backslash G_i}, f^{r_{G_i(2)}}_{\chi \backslash G_i}, \dots, f^{r_{G_i(L)}}_{\chi \backslash G_i}]$, are some of the intermediate results obtained in the map phase by group $G_j$ which are wanted by group $G_i$, so for example, $f^{r_{G_i(1)}}_{\chi \backslash G_i}$ represents the intermediate result obtained in the map phase by each node of group $G_j$, and which is wanted by the first node of group $G_i$.

Then these vectors (precoded messages) are combined in a Step **317,** by creating - for example - a linear combination of those vectors, in, for example, the form

$$X_{BS,\chi \backslash G_j} = \sum_{G_i \in \chi \backslash G_j} H^{\perp}_{BS,G_i} \cdot f_{G_i}(\chi)$$

All the N message vectors that are combined together are such that each of them is intended for a specific group and each of them is known already by the other $N$ - 1 groups, which have mapped it already and have it stored. To clarify, each vector $H^{\perp}_{BS,G_i} \cdot f_{G_i}(\chi)$ is intended for group $G_i$, is already known at all the nodes of all the groups $G_k \in \chi \backslash G_i$. This fact that all nodes in these groups know the values of these vectors, is a direct result of the invented grouping method, and it will result in communication speedup.

In a Step **318,** the process proceeds with the Precoding of the Combined Messages. This is achieved as follows: $X_{BS,\chi \backslash G_j}$ is pre-multiplied by the precoder $H^{\perp}_{G_j,BS}$. Hence, the signal to be transmitted by group $G_j$ takes the form:

$$X_{G_j,BS,\chi \backslash G_j} = H^{\perp}_{G_j,BS} \cdot \sum_{G_i \in \chi \backslash G_j} H^{\perp}_{BS,G_i} \cdot f_{G_i}(\chi)$$

Then, in a Step **319** Group $G_j$ transmits the vector generated at Step 318. Each of the $L_c$ scalars of the vector is transmitted by a different node of the group.

In a Step **320** the process is repeated from step 312 by choosing, if required by the specific implementation, a new transmitting group from the set $\chi$. In a standard, basic implementation of the process, all nodes in the set $\chi$ are eventually chosen to. be the transmitting group. Finally, in a Step **321,** the process is repeated for all possible sets $\chi \in X$.

**Phase 3: Process that leads to the transmission of the categories in downiink**

This process is illustrated in Figure 12 and takes place at the wireless edge node after the wireless edge node has received a signal, Step **323,** from a transmitting group $G_j$ in Step **319,** i.e. after it receives:

$$H_{G_j,BS} \cdot H_{G_j,BS}^{\perp} \cdot \sum_{G_i \in \chi \backslash G_j} H_{BS,G_i}^{\perp} \cdot f_{G_i}(\chi)$$

which, by design, is :

$$X_{BS,\chi \backslash G_j} = \sum_{G_i \in \chi \backslash G_j} H_{BS,G_i}^{\perp} \cdot f_{G_i}(\chi),$$

the wireless edge node re-transmits the received signal $X_{BS,\chi \backslash G_j}$ (Step-**324**).

**Phase 3 - Process of decoding at the receiving nodes**

In the following the authors describe the process of decoding, illustrated in Figure 13 happening in the third time slot. The process is presented for a single node and it has to be executed by all $K$ nodes involved in the computation. This process is comprised of 7 steps (**330-336**).

In a first step, Step **330,** each node checks if the node's group belongs in the set $\chi \backslash G_j$ of active receiving groups, where in this case $G_j \in \chi$ is the transmitting group. If the node belongs to the upcoming transmission (its group belongs to the set $\chi$) then the process proceeds with a Step **331** otherwise with a Step **337.** If the node does riot belong in the set of active receivers, then in Step **337** it waits for the next transmission.

Else, if it belongs in the upcoming reception (active receiver), then in a Step **331**, the node gathers the channel matrices (CSI) between the edge node and the other $N$ - 1 active receiving groups from $\chi$. In a next step, Step **332,** the node transmits its own channel state information CSI.

In a next step **333,** the process proceeds to the reception of a message. In that respect, the node receives the signal from the base station. After that, in a Step **334,** interference is removed by the use of mapped segments. To achieve this, the node proceeds to decode it by removing the unwanted interference intended for the nodes in other groups by using a) the channel state information that was exchanged in step 331 and 332 and, also by using b) the chunk-related categories that the node has computed in the mapping phase. We remind here that interference caused by messages intended for users in the same group (intra-group interference) is resolved by the use of the precoding matrix at the transmitter.

To clarify, at a group level, a given receiving group $G_k$ calculates

$$\sum_{G_i \in \chi \backslash \{G_j, G_k\}} H_{BS,G_i}^{\perp} \cdot f_{G_i}(\chi)$$

and subtracts it from the received signal (recall: any such node in group $G_k$ has both the CSI/precoder information in the above expression, as well as - due to invented data allocation-and-mapping method - also has all the information $f_{G_i}(\chi)$, $G_i \in \chi \backslash \{G_j, G_k\}$). Hence, at a group level, the received (noise here is ignored for brevity) signal, after subtraction of the above combination, takes the form

$$H_{BS,G_k} \cdot H_{BS,G_k}^{\perp} \cdot f_{G_k}(\chi)$$

which, by standard choices of precoding matrices $H_{G_j,G_k}^{\perp}$, can be free (or approximately free) of inter-group interference. We here clarify that by saying "at a group level" we refer to the fact that the $i$-th node of the group, can calculate the $i$-th element of the above vector.

In a Step **335,** the message is stored in the node's memory in order to be used in the reduce phase. In a Step **336** a test is performed to determine whether the node has received all remaining chunk-categories. If the result of the test is positive, i.e. if the node has received all remaining chunk-categories, then the process ends, otherwise it repeats the process from the beginning.

**• Phase 4 - Reduce**

In a fourth time slot, the reduce phase takes place. Here, the computing nodes merge all chunks of the same category and perform the requested task in a completely parallel manner.

**Analysis**

By comparing the number of chunks $S_1 = t\binom{K}{t}$ required in the aforementioned state-of-art and the number of chunks $S^* = \frac{t}{L_c}\binom{K/L_c}{t/L_c}$ in the here proposed method, we can note that

$$\frac{S_1}{S^*} = \frac{t \cdot \binom{K}{t}}{\frac{t}{L_c} \cdot \binom{K/L_c}{t/L_c}} \approx L_c \cdot \left( \left(\frac{1}{\gamma}\right)^{\frac{L_c-1}{L_c}} \right)^t$$

and can thus deduce that, for a fixed parameter t, the number of required chunks is now exponentially smaller compared to the state-of-art algorithm.

To further understand the importance of the above, we will use the following example.

**Example based on the third embodiment:** Assume $K = 16$ wireless computing nodes, a base station (BS), being assigned the task of sorting a set of $1.2 \cdot 10^4$ real numbers belonging in the range of $(0,1600)$. Assume these nodes cannot communicate via D2D communication (for example because of power constraints and/or due to large distances between each other). A wireless edge node with $L = 4$ antennas is available to facilitate them to communicate, meaning that all $K$ nodes can communicate with the edge node. If we assume that the chosen parameter is t = 8 for this setup, we can see that the state-of-art with a single antenna edge node and without including any cooperation, in order for this redundancy associated gains to be achieved, it would require that the number of chunks should be

$$S_1 = t \cdot \binom{K}{t} \approx 10^5$$

chunks, thus making it infeasible to achieve the gain of $t = 8$ in the communication phase. On the other hand, In the here proposed method we will see that, by choosing the cooperation parameter to be $L_c = 4$ and by using an edge node with $L = 4$ antennas, the subpacketization will be reduced to $$S^* = \frac{t}{L_c}\binom{K/L_c}{t/L_c} = 2 \cdot \binom{4}{2} = 12$$

chunks which will allow to reap the aforementioned benefits from the smaller number of chunks.

**• Phase 1- Data Assignment:** Initially, the dataset F comprized of the $1,2 \cdot 10^4$ numbers is segmented into 12 non-overlapping chunks, were each chunk is named using two indices as follow $F_{\sigma,\tau}$ $\sigma \in \left\{ 1, \ldots, \frac{t}{L_c} \right\} = \{1,2\},$

$$\tau \subset \left\{1, \dots, \frac{K}{L_c}\right\} = \{1,2,\dots,4\}, \quad |\tau| = \frac{t}{L_c} = 2 \quad .$$ Specifically, the chunks created are $F_{\sigma,\tau}$ $(\sigma,\tau) \in \{(1,12), (2,12),$ (1,13), (2,13), (1,14), (2,14), (1,23), (2,23), (1,24), (2,24), (1,34), (2,34)\}. It can be seen that the second index is a set comprised of $\frac{t}{L_c} = 2$ numbers, creating all possible combinations of two distinct numbers from{1,2,3,4}. Then, nodes are divided into $\frac{K}{L_c} = 4$ groups, such that in each group there would be $L_c$ nodes. For example, one assignment of nodes to groups could be

$$G_1 = \{1,5,9,13\}, G_2 = \{2,6,10,14\}, G_3 = \{3,7,11,15\}, G_4 = \{4,8,12,16\}.$$

After nodes are assigned to a group, the chunks are communicated to the nodes and each node stores some of the chunks according to $G_i(k) \leftarrow \{F_{\sigma,\tau} : \sigma \in \left\{1,2,\dots,\frac{t}{L_c}\right\}, \tau \ni i\}$. As mentioned in the description of the embodiment, intra-group dataset assignment is correlated, so in this particular example, nodes belonging in the same group store exactly the same chunks for processing.

- **Phase 2 - Mapping:** In the mapping phase, each node acts on each chunk that had been assigned in Phase 1. In particular, a node will create, for each of its chunks, 16 chunk-specific categories as follows. For any one chunk, say chunk $F_{\sigma,\tau}$ the following categories are created $f_{\sigma,\tau}^1, f_{\sigma,\tau}^2, \dots, f_{\sigma,\tau}^{16}$ such that category $f_{\sigma,\tau}^1$ will be filled with all numbers of chunk $F_{\sigma,\tau}$ which belong in the range (0,100], category $f_{\sigma,\tau}^2$ will be filled with all numbers of chunk $F_{\sigma,\tau}$ which belong in the range (100,200], and so on. This mapping process happens in all nodes and for each chunk that has been assigned to these nodes.

- **Phase 3 - Communication:** In this phase, the objective is to exchange among the nodes the different categories created in Phase 2, such that node $k \in \{1,2, \dots, K\}$ will finally haveall $f_{\sigma,\tau}^k$, $\sigma \in \{1,2\}$, $\tau \subset \{1,2, \dots, \frac{K}{L_c}\}$, $|\tau| = \frac{t}{L_c}$. To this goal, initially nodes exchange channel state information (CSI), i.e. each group gets the channel matrices between the Base Station and the other groups. Then, the nodes of a group cooperate by creating a distributed wireless transmitter and transmit the categories of interest to the base station, which Base Station simply rebroadcasts the signal, as it was received, to all nodes in some $\frac{t}{L_c} = 2$ groups.

Specifically, the transmissions that take place are the following:

**Sub-phase 1- Uplink**

**From Group 1:**

$$X_{G_1,BS,\{G_2,G_3\}} = H_{G_1,BS}^{\perp} H_{BS,G_2}^{\perp} \cdot \left[f_{1,13}^2, f_{1,13}^6, f_{1,13}^{10}, f_{1,13}^{14}\right]^T + H_{G_1,BS}^{\perp} H_{BS,G_3}^{\perp} \cdot \left[f_{1,12}^3, f_{1,12}^7, f_{1,12}^{11}, f_{1,12}^{15}\right]^T,$$

$$X_{G_1,BS,\{G_2,G_4\}} = H_{G_1,BS}^{\perp} H_{BS,G_2}^{\perp} \cdot \left[f_{1,14}^2, f_{1,14}^6, f_{1,14}^{10}, f_{1,14}^{14}\right]^T + H_{G_1,BS}^{\perp} H_{BS,G_4}^{\perp} \cdot \left[f_{1,12}^4, f_{1,12}^8, f_{1,12}^{12}, f_{1,12}^{16}\right]^T,$$

$$X_{G_1,BS,\{G_3,G_4\}} = H^{\perp}_{G_1,BS}H^{\perp}_{BS,G_3} \cdot [f^3_{1,14}, f^7_{1,14}, f^{11}_{1,14}, f^{15}_{1,14}]^T + H^{\perp}_{G_1,BS}H^{\perp}_{BS,G_4} \cdot [f^4_{1,13}, f^8_{1,13}, f^{12}_{1,13}, f^{16}_{1,13}]^T.$$

**From Group 2:**

$$X_{G_2,BS,\{G_1,G_3\}} = H^{\perp}_{G_2,BS}H^{\perp}_{BS,G_1} \cdot [f^1_{1,23}, f^5_{1,23}, f^9_{1,23}, f^{13}_{1,23}]^T + H^{\perp}_{G_2,BS}H^{\perp}_{BS,G_3} \cdot [f^3_{2,12}, f^7_{2,12}, f^{11}_{2,12}, f^{15}_{2,12}]^T,$$

$$X_{G_2,BS,\{G_1,G_4\}} = H^{\perp}_{G_2,BS}H^{\perp}_{BS,G_1} \cdot [f^1_{1,24}, f^5_{1,24}, f^9_{1,24}, f^{13}_{1,24}]^T + H^{\perp}_{G_2,BS}H^{\perp}_{BS,G_4} \cdot [f^4_{2,12}, f^8_{2,12}, f^{12}_{2,12}, f^{16}_{2,12}]^T,$$

$$X_{G_2,BS,\{G_3,G_4\}} = H^{\perp}_{G_2,BS}H^{\perp}_{BS,G_3} \cdot [f^3_{1,24}, f^7_{1,24}, f^{11}_{1,24}, f^{15}_{1,24}]^T + H^{\perp}_{G_2,BS}H^{\perp}_{BS,G_4} \cdot [f^4_{1,23}, f^8_{1,23}, f^{12}_{1,23}, f^{16}_{1,23}]^T.$$

**From Group 3:**

$$X_{G_3,BS,\{G_1,G_2\}} = H^{\perp}_{G_3,BS}H^{\perp}_{BS,G_1} \cdot [f^1_{2,23}, f^5_{2,23}, f^9_{2,23}, f^{13}_{2,23}]^T + H^{\perp}_{G_3,BS}H^{\perp}_{BS,G_2} \cdot [f^2_{2,13}, f^6_{2,13}, f^{10}_{2,13}, f^{14}_{2,13}]^T,$$

$$X_{G_3,BS,\{G_1,G_4\}} = H^{\perp}_{G_3,BS}H^{\perp}_{BS,G_1} \cdot [f^1_{1,34}, f^5_{1,34}, f^9_{1,34}, f^{13}_{1,34}]^T + H^{\perp}_{G_3,BS}H^{\perp}_{BS,G_4} \cdot [f^4_{2,13}, f^8_{2,13}, f^{12}_{2,13}, f^{16}_{2,13}]^T,$$

$$X_{G_3,BS,\{G_2,G_4\}} = H^{\perp}_{G_3,BS}H^{\perp}_{BS,G_2} \cdot [f^2_{1,34}, f^6_{1,34}, f^{10}_{1,34}, f^{14}_{1,34}]^T + H^{\perp}_{G_3,BS}H^{\perp}_{BS,G_4} \cdot [f^4_{2,23}, f^8_{2,23}, f^{12}_{2,23}, f^{16}_{2,23}]^T.$$

**From Group 4:**

$$X_{G_4,BS,\{G_1,G_2\}} = H^{\perp}_{G_4,BS}H^{\perp}_{BS,G_1} \cdot [f^1_{2,24}, f^5_{2,24}, f^9_{2,24}, f^{13}_{2,24}]^T + H^{\perp}_{G_4,BS}H^{\perp}_{BS,G_2} \cdot [f^2_{2,14}, f^6_{2,14}, f^{10}_{2,14}, f^{14}_{2,14}]^T,$$

$$X_{G_4,BS,\{G_1,G_3\}} = H^{\perp}_{G_4,BS}H^{\perp}_{BS,G_1} \cdot [f^1_{2,34}, f^5_{2,34}, f^9_{2,34}, f^{13}_{2,34}]^T + H^{\perp}_{G_4,BS}H^{\perp}_{BS,G_3} \cdot [f^3_{2,14}, f^7_{2,14}, f^{11}_{2,14}, f^{15}_{2,14}]^T,$$

$$X_{G_4,BS,\{G_2,G_3\}} = H^{\perp}_{G_4,BS}H^{\perp}_{BS,G_2} \cdot [f^2_{2,34}, f^6_{2,34}, f^{10}_{2,34}, f^{14}_{2,34}]^T + H^{\perp}_{G_4,BS}H^{\perp}_{BS,G_3} \cdot [f^3_{2,24}, f^7_{1,24}, f^{11}_{2,24}, f^{15}_{2,24}]^T.$$

**Sub-phase 2- Downlink**

**Messages received from Group 1:**

$$X_{BS,\{G_2,G_3\}} = H_{BS,G_2}^{\perp} \cdot \left[f_{1,13}^2, f_{1,13}^6, f_{1,13}^{10}, f_{1,13}^{14}\right]^T + H_{BS,G_3}^{\perp} \cdot \left[f_{1,12}^3, f_{1,12}^7, f_{1,12}^{11}, f_{1,12}^{15}\right]^T,$$

$$X_{BS,\{G_2,G_4\}} = H_{BS,G_2}^{\perp} \cdot \left[f_{1,14}^2, f_{1,14}^6, f_{1,14}^{10}, f_{1,14}^{14}\right]^T + H_{BS,G_4}^{\perp} \cdot \left[f_{1,12}^4, f_{1,12}^8, f_{1,12}^{12}, f_{1,12}^{16}\right]^T,$$

$$X_{BS,\{G_3,G_4\}} = H_{BS,G_3}^{\perp} \cdot \left[f_{1,14}^3, f_{1,14}^7, f_{1,14}^{11}, f_{1,14}^{15}\right]^T + H_{BS,G_4}^{\perp} \cdot \left[f_{1,13}^4, f_{1,13}^8, f_{1,13}^{12}, f_{1,13}^{16}\right]^T.$$

Messages received from Group 2:

$$X_{BS,\{G_1,G_3\}} = H_{BS,G_1}^{\perp} \cdot \left[f_{1,23}^1, f_{1,23}^5, f_{1,23}^9, f_{1,23}^{13}\right]^T + H_{BS,G_3}^{\perp} \cdot \left[f_{2,12}^3, f_{2,12}^7, f_{2,12}^{11}, f_{2,12}^{15}\right]^T,$$

$$X_{BS,\{G_1,G_4\}} = H_{BS,G_1}^{\perp} \cdot \left[f_{1,24}^1, f_{1,24}^5, f_{1,24}^9, f_{1,24}^{13}\right]^T + H_{BS,G_4}^{\perp} \cdot \left[f_{2,12}^4, f_{2,12}^8, f_{2,12}^{12}, f_{2,12}^{16}\right]^T,$$

$$X_{BS,\{G_3,G_4\}} = H_{BS,G_3,}^{\perp} \cdot \left[f_{1,24}^3, f_{1,24}^7, f_{1,24}^{11}, f_{1,24}^{15}\right]^T + H_{BS,G_4}^{\perp} \cdot \left[f_{1,23}^4, f_{1,23}^8, f_{1,23}^{12}, f_{1,23}^{16}\right]^T.$$

**Messages received from Group 3:**

$$X_{BS,\{G_1,G_2\}} = H_{BS,G_1}^{\perp} \cdot \left[f_{2,23}^1, f_{2,23}^5, f_{2,23}^9, f_{2,23}^{13}\right]^T + H_{BS,G_2}^{\perp} \cdot \left[f_{2,13}^2, f_{2,13}^6, f_{2,13}^{10}, f_{2,13}^{14}\right]^T,$$

$$X_{BS,\{G_1,G_4\}} = H_{BS,G_1}^{\perp} \cdot \left[f_{1,34}^1, f_{1,34}^5, f_{1,34}^9, f_{1,34}^{13}\right]^T + H_{BS,G_4}^{\perp} \cdot \left[f_{2,13}^4, f_{2,13}^8, f_{2,13}^{12}, f_{2,13}^{16}\right]^T,$$

$$X_{BS,\{G_2,G_4\}} = H_{BS,G_2}^{\perp} \cdot \left[f_{1,34}^2, f_{1,34}^6, f_{1,34}^{10}, f_{1,34}^{14}\right]^T + H_{BS,G_4}^{\perp} \cdot \left[f_{2,23}^4, f_{2,23}^8, f_{2,23}^{12}, f_{2,23}^{16}\right]^T.$$

**Messages received from Group 4:**

$$X_{BS,\{G_1,G_2\}} = H_{BS,G_1}^{\perp} \cdot \left[f_{2,24}^1, f_{2,24}^5, f_{2,24}^9, f_{2,24}^{13}\right]^T + H_{BS,G_2}^{\perp} \cdot \left[f_{2,14}^2, f_{2,14}^6, f_{2,14}^{10}, f_{2,14}^{14}\right]^T,$$

$$X_{BS,\{G_1,G_3\}} = H_{BS,G_1}^{\perp} \cdot \left[f_{2,34}^1, f_{2,34}^5, f_{2,34}^9, f_{2,34}^{13}\right]^T + H_{BS,G_3}^{\perp} \cdot \left[f_{2,14}^3, f_{2,14}^7, f_{2,14}^{11}, f_{2,14}^{15}\right]^T,$$

$$X_{BS,\{G_2,G_3\}} = H_{BS,G_2}^{\perp} \cdot \left[f_{2,34}^2, f_{2,34}^6, f_{2,34}^{10}, f_{2,34}^{14}\right]^T + H_{BS,G_3}^{\perp} \cdot \left[f_{2,24}^3, f_{1,24}^7, f_{2,24}^{11}, f_{2,24}^{15}\right]^T.$$

After transmitting the above, we can see that each node has access to the category that was originally assigned to it, thus the communication phase is completed.

• **Phase 4 - Reduce:** Following the shuffling phase, each node has access to all the numbers that need to be sorted from the original vector that belong to a certain range that this node was assigned. For example, Node 1 has access to all the numbers of the original vector that belong to the range (0,100), Node 2 has access to all the numbers of the original vector that belong to the range (100,200) and so on. This means that, each node can now perform the process of reducing, in this particular example sorting, in a completely parallel manner. At the end, the final sorted vector will be the ordered concatenation of the sorted vectors from all 16 nodes.

## BROAD APPLICABILITY OF INVENTED METHOD

The invention presented in this patent application here is fundamental and basic, and hence applies readily - with simple modifications - to a wider variety of settings than the ones presented in the embodiments that we have chosen. Here we list a set of (but not limited to) variations, some of which are already mentioned throughout the patent, which can be derived promptly from the main method described above.

• Use, in a wireless setting, of multiple antennas in the transmission and reception of the messages.
• Already existing presence of the dataset distributed among the computing nodes. Such already existing dataset assignment is generally not optimal as the one presented in the above embodiments. To adapt, one could act as follows:

o Re-assigning the dataset to the nodes, by splitting and moving the segments, in order to get the desired structured redundancy;
o Re-designing the data exchange phase to exploit the existing (most likely sub-optimal) redundancy.

• Unevenness of the categories' size, which for instance can be handled by zero padding the smaller categories, or with greedy methods.
• Unequal number of categories each node is responsible for, which for instance can be handled by greedily repeating (picking one category per node at a time) the basic presented exchange phase.
• Variation of the grouping function that additionally takes into account the nodes' properties (battery life, power, etc.) and different channel\link strengths among the nodes for a wireless setting and other topological characteristics, the node's existing loads, etc.
• Not necessarily sequential execution of the four phases that the invented method is comprised of. For example, the exchange phase can start while some other nodes (not involved in the communication) have not finished the mapping phase yet. This, for example, becomes useful when the nodes have different computational power.
• Different data assignment methods than the clique-covering based described above. Such methods can include, among others, for example placement-delivery array codes, hypergraph codes, clique covering codes where the data assignment is a fraction or approximation of what we have described in the basic setting here, or where the codes can be of a more decentralized nature with random placement and potentially greedy delivery. All the methods benefit directly from the grouping and coordination basic invention here.

## Claims

1.   A process of communication between a set of *K* nodes (31), {$N_1,N_2, ..., N_K$}, connected in a wired manner, which nodes (31) have storing and computing capabilities and which nodes have a distributed algorithm to execute, wherein each node is connected to one or more wired intermediate nodes which intermediate nodes can process and retransmit the information received, wherein the said process involves the steps of:

a. Grouping nodes (21) into groups, with a given number of nodes per group;
b. Arranging a first time slot (22) during which the information to be computed is communicated to the nodes and where each node stores a predefined portion of this information;
c. Arranging a second time slot (23) during which the computing nodes perform some preliminary operation on their stored information;
d. Arranging a third time slot (24) during which

    i. A set of nodes communicates part of the operated-upon information by means of group-based node coordination;
    ii. Othersets of nodes, which decode said information by means of their preliminarily operated-upon information.

**2.** The process of Claim 1 where the storing of information in the first time slot, happens, at least, as a function of the group a node belongs to.

**3.** The process of Claim 1 where nodes have one or more input-output interfaces.

**4.** A process of communication between a set of $K$ nodes, $\{N_1, N_2, ..., N_K\}$, connected in a wireless manner, which nodes have storing and computing capabilities and which nodes have a distributed algorithm to execute, wherein the said process involves the steps of:

    a. Grouping nodes (21) into groups, with a given number of nodes per group;
    b. Arranging a first time slot (22) during which the information to be computed is communicated to the nodes and where each node stores a predefined portion of this information;
    c. Arranging a second time slot (23) during which the computing nodes perform some preliminary operation on their stored information;
    d. Arranging a third time slot (24) during which

        i. A set of nodes communicates part of the operated-upon information by means of intra-group node cooperation;
        ii. Othersets of nodes, which decode said information by means of their preliminarily operated-upon information.

**5.** The process of Claim 4 where the storing of information in the first time slot happens, at least, as a function of the group a node belongs to.

**6.** The process of Claim 4 where nodes have one or more antennas.

**7.** A process of communication between a set of $K$ nodes, $\{N_1, N_2, ..., N_K\}$ connected in a wireless manner to a facilitating base station (BS), where these nodes have storing and computing capabilities, where the nodes have a distributed algorithm to execute, and where the facilitating base station is equipped with $L \geq 2$ antennas. This said process involves the steps of:

    a. Grouping nodes into groups, with a given number of nodes per group;
    b. Arranging a first time slot during which the information to be computed is communicated to the nodes and where each node stores a predefined portion of this information;
    c. Arranging a second time slot during which the computing nodes perform some preliminary operation on their stored information;
    d. Arranging a third time slot during which

        i. A set of nodes communicates part of the preliminarily operated-upon information to the facilitating base station by means of intra-group node cooperation;
        ii. The facilitating base station retransmits the information received to the destination nodes;
        iii. Other sets of nodes decode said information by means of their preliminarily operated-upon information.

**8.** The process of Claim 7 where the storing of information in the first time slot happens, at least, as a function of the group a node belongs to.

**9.** The process of Claim 7 where nodes have one or more antennas.

**10.** The process of Claim 7 where there are more than one facilitating base stations.

11. A transmitting apparatus comprised of:

a. A dataset segmenter implemented as a software or hardware or as a combination of the two that can divide the initial dataset into smaller datasets;

b. A cooperator which arranges the cooperation between a set of nodes in the form, among others, of time synchronization;

c. A communicator which could be in the form of wireless network or a wired connection or a combination of the two, between the nodes which allows for the exchange of some form of channel state information and general cooperation information, so as to create distributed precoders;

d. A distributed precoder which arranges the creation of a message in each of the transmitting nodes making use of network coding coefficients or channel state information - which channel state information could take various forms such as precoder preference.

e. A combiner, which takes a set of elements and creates a new element as a form of a combination of the aforementioned elements;

f. An encoder, which is implemented as software or hardware or a combination of the two and which receives a message from the combiner and maps it into an encoded message.

12. A receiving apparatus comprised of:

a. A storage;

b. A decoder which makes use of preliminarily operated-upon information as well as network coding coefficients or channel state information - which channel state information could take various forms such as precoder preference - in order to remove interference from a received signal and output the desired signal.

# Fig. 1a

| Grouping nodes into groups | 21 |

↓

| Arranging a first time slot during which the information to be computed is communicated to the nodes | 22 |

| Arranging a second time slot during which the computing nodes perform some preliminary operation on their stored information | 23 |

↓

| Arranging a third time slot during which
- A set of nodes communicates part of the operated-upon information by means of group-based node coordination;
- Other sets of nodes, which decode said information by means of their preliminarily operated-upon information | 24 |

# Fig. 1b

Assign names to nodes — 101

Choose $L_c$ cooperation parameter — 102

Assign nodes to groups — 103

Create subpacketization indices — 104

Segment dataset — 105

Communicate dataset segments — 106

Group-based dataset segment storing — 107

Assign reduce categories to nodes — 108

# Fig. 2

```
┌─────────────────────────────────────────────┐
│   ┌──────────────────────────────┐           │
│   │  Create Sets of Active Groups │──── 50    │
│   └──────────────────────────────┘           │
│   ┌──────────────────────────────┐           │
│   │  Select Set of Active Groups  │──── 51    │
│   └──────────────────────────────┘           │
│   ┌──────────────────────────────┐           │
│   │  Select Transmitting Group    │──── 52    │
│   └──────────────────────────────┘           │
│   ┌──────────────────────────────┐           │
│   │  Collect inter-GroupNCCI      │──── 53    │
│   └──────────────────────────────┘           │
│   ┌──────────────────────────────┐           │
│   │  Create Distributed Precoders │──── 54    │
│   └──────────────────────────────┘           │
│   ┌──────────────────────────────┐           │
│   │  Create Distributed messages  │──── 55    │
│   └──────────────────────────────┘           │
│   ┌──────────────────────────────┐           │
│   │  Combine Distributed messages │──── 56    │
│   └──────────────────────────────┘           │
│   ┌──────────────────────────────┐           │
│   │  Transmit Message Vector      │──── 57    │
│   └──────────────────────────────┘           │
│   ┌──────────┐                                │
│   │  Repeat  │──── 58                          │
│   └──────────┘                                │
│   ┌──────────┐                                │
│   │  Repeat  │──── 59                          │
│   └──────────┘                                │
└─────────────────────────────────────────────┘
```

# Fig. 3

Does node's group belong in set of active groups? ⟋60

| NO | YES |

Await next transmission ⟋62

Gather network coding coefficients ⟋61

Transmit own network coding coefficients ⟋63

Receive message ⟋64

Use mapped segments to remove interference ⟋65

store message in memory ⟋66

has node received all categories? ⟋67

| NO | YES |

end

# Fig. 4

Fig. 5

Assign names to nodes — 201

Choose $L_c$ cooperation parameter — 202

Assign nodes to groups — 203

Create subpacketization indices — 204

Segment dataset — 205

Communicate dataset segments — 206

Group-based dataset segment storing — 207

Assign reduce categories to nodes — 208

# Fig. 6

Create Sets of Active Groups — 70

Select Set of Active Groups — 71

Select Transmitting Group — 72

Collect inter-Group CSI — 73

Create Distributed Precoders — 74

Create Distributed messages — 75

Combine Distributed messages — 76

Transmit Message Vector — 77

Repeat — 78

Repeat — 79

Fig. 7

Does node's group belong in set of active groups? — 80

NO | YES

Await next transmission — 81

Gather Channel State Information — 82

Transmit own CSI — 83

Receive message — 84

Use mapped segments to remove interference — 85

store message in memory — 86

has node received all categories? — 87

NO | YES

end

Fig. 8

Fig. 9

Assign names to nodes /301

Assign nodes to groups /302

Create subpacketization indices /303

Segment dataset /304

Communicate dataset segments /305

Group-based dataset segment storing /306

Assign reduce categories to nodes /307

# Fig.10

Fig. 11

Receive Vector message — 323

Transmit Vector Message — 324

# Fig. 12

Fig.13

Europäisches
Patentamt

European
Patent Office

Office européen
des brevets

## EUROPEAN SEARCH REPORT

Application Number

EP 17 29 0156

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LI SONGZE ET AL: "Edge-Facilitated Wireless Distributed Computing", 2016 IEEE GLOBAL COMMUNICATIONS CONFERENCE (GLOBECOM), IEEE, 4 December 2016 (2016-12-04), pages 1-7, XP033058491, DOI: 10.1109/GLOCOM.2016.7841765 [retrieved on 2017-02-02] * page 1, column 2, line 3 - page 7, column 1, line 15 * | 1-10 | INV. H04L29/08 ADD. G06F7/24 G06F9/50 H04L1/00 |
| X,D | LI SONGZE ET AL: "Coded MapReduce", 2015 53RD ANNUAL ALLERTON CONFERENCE ON COMMUNICATION, CONTROL, AND COMPUTING (ALLERTON), IEEE, 29 September 2015 (2015-09-29), pages 964-971, XP032889768, DOI: 10.1109/ALLERTON.2015.7447112 [retrieved on 2016-04-04] * page 1, column 2, line 1 - page 8, column 2, line 40 * | 11,12 | |

TECHNICAL FIELDS
SEARCHED (IPC)

H04L
G06F

The present search report has been drawn up for all claims

| Place of search | Date of completion of the search | Examiner |
|---|---|---|
| The Hague | 8 March 2018 | Sager, Bernard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 496 366 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Coded MapReduce. **S. LI ; M. A. MADDAH-ALI ; A. S. AVESTIMEHR.** 53rd Annual Allerton Conference on Communication. Control, and Computing (Allerton), 2015, 964-971
- Coded TeraSort. **S. LI ; S. SUPITTAYAPORNPONG ; M. A. MADDAH-ALI ; S. AVESTIMEHR.** IEEE International Parallel and Distributed Processing Symposium. Workshops, 2017, 389-398
- **S. LI ; Q. YU ; M. A. MADDAH-ALI ; A. S. AVESTIMEHR.** Edge-Facilitated Wireless Distributed Computing. *2016 IEEE Global Communications Conference (GLOBECOM),* 2016, 1-7